(19) 

(11) **EP 4 728 694 B1**

(12) **EUROPEAN PATENT SPECIFICATION**

(45) Date of publication and mention of the grant of the patent:
**02.09.2026 Bulletin 2026/36**

(21) Application number: **25760402.5**

(22) Date of filing: **01.08.2025**

(51) International Patent Classification (IPC):
***H04L 9/08*** *(2006.01)* ***H04L 9/06*** *(2006.01)*
***H04L 9/32*** *(2006.01)* ***H04W 12/041*** *(2021.01)*
***H04W 12/30*** *(2021.01)* ***H04W 12/00*** *(2021.01)*
***H04W 12/037*** *(2021.01)* ***H04W 12/0431*** *(2021.01)*
***H04W 12/45*** *(2021.01)*

(52) Cooperative Patent Classification (CPC):
**H04W 12/009; H04L 9/0637; H04L 9/0833; H04L 9/3234; H04W 12/037; H04W 12/041; H04W 12/0431; H04W 12/35; H04W 12/45;**
H04L 2209/80

(86) International application number:
**PCT/GB2025/051722**

(87) International publication number:
**WO 2026/027900 (05.02.2026 Gazette 2026/06)**

(54) **SECURE COMMUNICATIONS FOR CONSTRAINED DEVICES**

SICHERE KOMMUNIKATION FÜR EINGESCHRÄNKTE VORRICHTUNGEN

COMMUNICATIONS SÉCURISÉES POUR DISPOSITIFS CONTRAINTS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.08.2024 GB 202411428**
**17.03.2025 GB 202503864**

(43) Date of publication of application:
**22.04.2026 Bulletin 2026/17**

(73) Proprietor: **DABCO LIMITED**
**London, W2 6BD (GB)**

(72) Inventor: **EVANS, Tim**
**London, Greater London W2 6BY (GB)**

(74) Representative: **Boult Wade Tennant LLP**
**Salisbury Square House**
**8 Salisbury Square**
**London EC4Y 8AP (GB)**

(56) References cited:
**US-A1- 2016 234 177** **US-A1- 2017 041 785**
**US-A1- 2022 368 684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 728 694 B1

## Description

### Field of the Invention

The present invention relates to a system and method for securely communicating with constrained devices. In particular, the method and system provide a secure and efficient way for shared keys to be provided to devices that have limited processing and are constrained by particular communication protocols and/or battery power.

### Background of the Invention

Machine to Machine (M2M), Internet of Things (IoT), and narrowband IoT (NB-IoT) devices are often numerous, hard-to-reach, and have constrained capabilities (owing to low cost, small size, low processing power or limited battery life), which includes having limited access to communication protocols, memory and throughput or bandwidth. They all may be considered to be examples of constrained devices. All of this makes their management, often remote, very complicated. Moreover, constrained devices often need to be managed in a secure manner. For example, they may contain information that is commercially sensitive and/or confidential for the one or more entities that manage and/or own said devices. There is a need to communicate with them in a secure way, while respecting these constraints.

3GPP generic bootstrapping architecture (GBA) is a protocol based on HTTP, which is based on TCP/IP. Using GBA, a device may obtain data from a bootstrapping server function (BSF) so that a shared secret can be established between the M2M device and a network application function (NAF) with which the M2M device is in communication. The shared secret may then be used by the M2M device and the NAF to establish secure communication.

This requires configuration of the devices to support two interfaces, one between the device and the BSF and the other between the device and the NAF, which might each utilise different communications protocols, for example CoAP and HTTP. For example, the interface between the device and the BSF may be based on HTTP, which may require a full browser implementation, and the interface between the device and the BSF may be based on CoAP. Therefore, GBA requires the device to support the internet protocol suite, TCP/IP, which may not be available to all constrained devices (e.g., NT-IoT devices).

Other authentication process can make use of SMS. For example, a bootstrapping message may be delivered by SMS to initiate secure communications. However, SMS may not be available to constrained devices.

3GPP TS 33.163 BEST (Battery Efficient Secure Transport for MTC devices) provides secure communications with constrained devices. Whilst BEST removes the need for a PKI server and device PKI, it has its own limitations. For example, BEST does not disguise the IMSI of a device at security setup.

Therefore, there is required a method and system that overcomes these problems.

US 2017/041785 describes a method and system for communicating securely with a user equipment, UE, using generic bootstrapping architecture, GBA, the system comprising a bootstrapping server function, BSF. A proxy server configured to receive messages from a user equipment, UE, in a first format. Convert the received messages from the first format to a second format. Transmit the received UE messages to a bootstrapping server function, BSF, in the second format. Receive messages from the BSF, in a third format. Convert the messages received from the BSF from the third format to a fourth format. Transmit the received BSF messages to the UE in the fourth format.

US 2016/234177 describes a method and system for securely communicating with a machine to machine, M2M, device comprising sharing a secret or data derived from the secret between the M2M device and a server. Establishing a connection between the M2M device and the server. Using the shared secret or data derived from the shared secret to establish cryptographic material on both the M2M device and the server. Securing communication between the M2M device and the server with a cryptographic protocol using the established cryptographic material. The cryptographic material is unrecoverable from the shared secret or data derived from the shared secret alone.

US 2022/368684 describes encrypted communication between terminal devices and service applications via a communication network. Such encrypted communication may be based on various hierarchical levels of encryption keys that are generated and managed by the communication network. Such encrypted communication and key management may be provided by the communication network to the terminal devices as a service that can be subscribed to. The various levels of encryption keys may be managed to improve flexibility of the communication network and to reduce potential security breaches.

### Summary of the Invention

In accordance with a first aspect, there is provided a method for sharing keys as described in claim 1. In accordance with a second aspect, there is provided a device as described in claim 13. In accordance with a third aspect, there is provided a system as described in claim 14.

Secure communications between entities (e.g., a device and a server) require cryptographic keys. Provisioning

devices in advance with one or more keys is costly and not always convenient for constrained devices. A device has a secure element, such as a universal integrated circuit card (UICC), a SIM or integrated SIM (iSIM) for carrying out secure cryptographic processes. Software on the device provides functionality for obtaining a key or keys that can be used for secure communications with a server or for other uses (e.g., signing messages). The shared key can be used multiple times or refreshed, as necessary (e.g., when it expires or if lost from the memory of the device).

A server generates a root of a session identifier. A session identifier is generated by the device using this session identifier root or seed. The session identifier may also include an encrypted or obscured version of an identifier of the device (e.g., its international mobile subscriber identifier or IMSI), a purpose of the session, and/or an application that will use a key or keys generated from the session identifier. The session identifier (e.g., BTID) is used as part of a seed for a new key or keys. As different keys may be required from time to time then the session identifier also includes other components or numbers that preferably change each time (e.g., the counter). This ensures that different keys can be generated without needing to repeat the initial sets of messages to share the session identifier root between the server and the device. The session identifier may include a

counter that increments each use, an identifier of a use of the new key (e.g., for messaging, signing, etc.), command options and control pane, an application on the device that will use the key or keys, etc. The seed is transmitted as a message from the device to the server. The session identifier includes a counter so that different keys (e.g., hundreds) may be generated from the same root.

An application on the device includes a set of group keys that are common to a plurality of devices. A key amongst the plurality of group keys is selected by the device based on the session identifier root. The device sends a message to the server encrypted using this particular group key. In response, the server sends back an authentication request to the device. This authentication request includes cryptographic material (e.g., RAND and AUTN) that the secure element of the device uses to authenticate the response and the software derives a new key. The new key is based on the cryptographic material and the message (session identifier) sent to the server. The server carries out the same derivation process to generate the same key, as the session identifier (including the session identifier root) is included in the message sent by the device to the server. The message also includes an identifier of the device (e.g., IMSI encrypted using the group key). The server uses the IMSI to retrieve the same cryptographic material (e.g., from a home location register - HLR). Now that the server and the device both have the same key, they can communicate securely until expiry of the key. If the server and the device have already set up an initial key then the cryptographic mater may be used to derive new keys using different session identifiers (e.g., incremented by a counter). The session identifiers should be unique and not repeated between devices.

In accordance with a first aspect, there is provided method for sharing keys between a device and a second server, the device having a secure element and a software application comprising a plurality of group keys and associated session identifiers, the method comprising the steps of:

> the software application receiving from within the device a request for a key, data describing the requested key and a requester secret shared with the second server;
> in response to the request for the key, the software application selecting one of the plurality of group keys and an associated session identifier;
> the device sending a message to a first server encrypted using the selected group key, the message including the associated session identifier and an identifier of the secure element;
> the first server decrypting the message using the group key identified by the associated session identifier;
> in response to the message the first server:
>
> > obtaining an authentication vector based on the identifier of the secure element, the authentication vector comprising key materials and an authentication request,
> > generating a request session identifier root,
> > encrypting, using the group key associated with the session identifier, a response formed from the authentication request and the request session identifier root,
> > sending the response to the device, and
> > generating a master key based on the key materials;
>
> the software application decrypting the response using the selected group key and sending the authentication request to the secure element;
> the secure element authenticating the authentication request and when valid generating the key materials from the authentication request and a key stored within the secure element;
> the software application deriving the master key based on the generated key materials;
> storing within the device the master key with the request session identifier root;
> the software application deriving one or more keys based on the master key, the data describing the requested key and

the requester secret;
the software application generating a key label for each of the one or more keys comprising the session identifier root and the data describing the requested key;
the device sending the key label to the second server;
the second server sending the key label and the requester secret to the first server;
the first server deriving the one or keys based on the master key, the key label and the requester secret; and
the first server sending the one or more keys to the second server. This further helps maintain security with constrained devices as a large number of keys does not need to be stored by the device, as these can be generated whenever required. Fewer steps may be included as certain data may be implied or extracted from a single message (including a session identifier). The session identifier root may be a concatenation or different data sets or numbers, for example.

Optionally, the secure element may be a UICC, a hardware security module, or an integrated SIM, iSIM. Other secure elements (both software and hardware) may be used.

Optionally, the method may further comprise the step of the device and the second server securing communications using the one or more keys. In other examples, the method may further comprise the step of the device and the first server securing communications using the one or more keys. The keys may be used for other purposes. A particular purpose identifier may form part of the session identifier.

Optionally, the step of the secure element of the device authenticating the response may further comprise the secure element generating a response (RES) based on the key materials and further wherein securing the communications includes sending RES to the second server. In other examples, securing the communications may include sending RES to the first server. This can use known cellular and SIM functionality with the secure element being a UICC, SIM or iSIM, for example.

Optionally, the communications are secured using advanced encryption standard, AES. Other encryption standards may be used.

Optionally, the method may further comprise the step of the device and/or the second server signing a message using the one or more keys. In another example, the method may instead or additionally further comprise the step of the first server signing a message using the one or more keys. The key or keys may be used for other purposes.

Optionally, the message and/or the response to the message may be encrypted using any one of:

a previously generated key, wherein the message includes a session identifier associated with the previously generated key; or
a pre-shared key. This can be done for subsequent key generation after an initial key or keys are agreed. The messages may between the device and the first and/or the second server, which can receive the generated keys from the first server or generate these keys based on material received from the first server, for example.

Optionally, the plurality of group keys may be pre-shared keys common to a plurality of separate devices. For example, the group keys may be common to a software application (e.g., prepared by a particular entity providing a service) that is installed on a group of devices. The group keys may form part of the software application, for example. However, each time a group key is used a different one may be selected based on the session identifier. This improves security even though all devices in the group have the same set of group keys.

Optionally, the session identifier may include an encrypted identifier of the device. As the identifier of the device is preferably unique then no two devices should generate the same session identifier and so no two devices will generate the same key or keys.

Optionally, the encrypted identifier of the device may be the device international mobile subscriber identity (IMSI). Other identifiers may be used.

Optionally, the first server may obtain the authentication vector from a home location register (HLR) based on the identifier of the device. Therefore, the first and/or second server do not need to store cryptographic material for each device and can instead generate it when needed.

Optionally, the message may further comprise an identifier of the serving network and the IMEI of the device. Therefore, this allows the first server to retrieve the key material (within the authentication vector) from the correct HLR.

Optionally, a secure hash algorithm, SHA, may be used to derive the one or more keys. For example, this may be the SHA256 function, or any SHA-2 functions. Other hash algorithms may be used.

Optionally, the software application may be executed within the secure element of the device or within an application store of the device.

Optionally, the derived one or more keys may be stored within the device and associated with the session identifier. The keys may also be generated whenever required to reduce storage requirements.

Optionally, the derived one or more keys may be stored within the first and/or second server. The keys may also be generated whenever required or following a particular event or trigger.

Optionally, the authentication vector may include RAND and AUTN. Therefore, cellular cryptographic techniques may be used. The authentication vector may also include XRES, keys (CK' and IK') and/or Key Access Security Management Entity (KASME).

Optionally, the session identifier may include data indicating a purpose of the one or more key. This adds to the complexity of the session identifier so a larger number of different keys can be generated for the same session identifier root (generated by the server).

Optionally, the message may include any one or more of:

data indicating a counter incremented each time the session identifier is used; and
an identifier of a serving network. The counter may be incremented (by the device) for each use of the session identifier root, use and/or application combination, for example.

Optionally, the method may further comprise the step of:
repeating the method steps to derive one or more new keys using a different session identifier. The session identifier may be changed based on use, application, and/or counter.

According to a second aspect, there is provided a device comprising:

a secure element;
a processor; and
memory storing computer-executable instructions that, when executed by the processor, cause the device to:

receive, by a software application from within the device, a request for a key, data describing the requested key and a requester secret shared with a second server;
in response to the request for the key, the software application selecting one of the plurality of group keys and an associated session identifier;
send a message to a first server encrypted using the selected group key, the message including the associated session identifier and an identifier of the secure element;
receive from a first server a response to the message, the response including an authentication request and a request session identifier root;
decrypt the response using the selected group key and sending the authentication request to the secure element;
the secure element authenticating the authentication request and when valid generating key materials from the authentication request and a key stored within the secure element;
derive, by the software application, a master key based on the generated key materials;
storing within the device the master key with the request session identifier root;
the software application deriving one or more keys based on the master key, the data describing the requested key and the requester secret;
the software application generating a key label for each of the one or more keys comprising the session identifier root and the data describing the requested key; and
the device sending the key label to the second server.

According to a third aspect, there is provided a system comprising:

the device, as described above; and
a first server comprising:

a processor; and
memory storing computer-executable instructions that, when executed by the processor, cause the first server to:
in response to a message received from the device:

obtain an authentication vector based on the identifier of the secure element, the authentication vector comprising key materials and an authentication request,
generate a request session identifier root,
encrypt, using the group key associated with the session identifier, a response formed from the authentication request and the request session identifier root,
send a response to the device,
generate a master key based on the key materials,
receive from a second server a key label and a requester secret,
derive the one or keys based on the master key, the key label and the requester secret, and

send the one or more keys to the second server.

Optionally, the computer-executable instructions may further cause the first server to retrieve the authentication vector from a home location register based on an identifier of the device included in a session identifier within the received message.

Against this background and in accordance with a further aspect there is provided a method for providing secure communications between a server and a device having a secure element and a software application comprising a plurality of group keys, the method comprising the steps of:

the software application generating a session identifier;
identifying one of the plurality of group keys based on at least a portion of the session identifier (e.g., all or part of the session identifier or a part of the session identifier provided by the server);
the device sending a message to the server encrypted using the identified group key, the message including the session identifier;
in response to the message, the server sending the device an authentication request encrypted using the identified group key;
the secure element of the device authenticating the response (this can be the response to the message, which is the authentication request);
the software application generating cryptographic material based on the message;
the device deriving one or more keys based on the cryptographic material and at least a portion of the session identifier; and
the server generating the one or more keys derived from the cryptographic material and the at least portion of the session identifier. Therefore, an initial set of keys may be set up between the device and the server to provide secure communications. This initial key or keys can be used to generate new keys, which can be generated using a new session identifier. For subsequent keys, the cryptographic material does not need to be generated as the server and device already have this. However, because the session identifier changes, then new keys can be generated and communications can be secured more effectively. Therefore, the method can repeat (any number of times as long as the session identifier is different) but just with steps:

the software application generating a (different) session identifier;
identifying one of the plurality of group keys based on at least a portion of the session identifier;
the device sending a message to the server encrypted using the identified group key, the message including the session identifier;
the device deriving one or more keys based on the cryptographic material and at least a portion of the (different) session identifier; and
the server generating the one or more keys derived from the cryptographic material and the at least portion of the (different) session identifier. This further helps maintain security with constrained devices as a large number of keys does not need to be stored by the device, as these can be generate whenever required. Fewer steps may be included as certain data may be implied or extracted from a single message (including a session identifier). The session identifier may be a concatenation or different data sets or numbers, for example.

Preferably, the secure element may be a UICC, a hardware security module, or an integrated SIM (iSIM). Other secure elements (both software and hardware) may be used.

Advantageously, the method may further comprise the step of the device and the server securing communications using the one or more generated keys. The keys may be used for other purposes. A particular purpose identifier may form part of the session identifier.

Optionally, the step of the secure element of the device authenticating the response may further comprise the secure element generating a response (RES) based on the cryptographic material and further wherein securing the communications includes sending the RES to the server. This can use known cellular and SIM functionality with the secure element being a UICC, SIM or iSIM, for example.

Optionally, the communications may be secured using advanced encryption standard, AES. Other encryption standards may be used.

Optionally, the method may further comprise the step of the device and/or the server signing a message using the one or more keys. The key or keys may be used for other purposes.

Optionally, the message and/or the response to the message may be encrypted using any one of:

a previously generated key, wherein the message includes a session identifier associated with the previously generated key; or

a pre-shared key. This can be done for subsequent key generation after an initial key or keys are agreed.

Preferably, the plurality of group keys may be pre-shared keys common to a plurality of separate devices. For example, the group keys may be common to a software application (e.g., prepared by a particular entity providing a service) that is installed on a group of devices. The group keys may form part of the software application, for example. However, each time a group key is used a different one may be selected based on the session identifier. This improves security even though all devices in the group have the same set of group keys.

Preferably, the session identifier may include an encrypted identifier of the device. As the identifier of the device is preferably unique then no two devices should generate the same session identifier and so no two devices will generate the same key or keys.

Preferably, the encrypted identifier of the device may be the device international mobile subscriber identity (IMSI). Other identifiers may be used.

Preferably, the server may obtain the cryptographic material from a home location register (HLR) based on the identifier of the device. Therefore, the server does not need to store cryptographic material for each device and can instead generate it when needed.

Optionally, the message may further comprise an identifier of the serving network and the IMEI of the device. Therefore, this allows the server to retrieve the cryptographic material from the correct HLR.

Optionally, the secure element of the device or the software application may derive the one or more keys. This may also be done within another component of the device.

Optionally, a secure hash algorithm (SHA) is used to derive the one or more keys. For example, this may be the SHA256 function, or any SHA-2 functions.

Optionally, the software application may be executed within the secure element of the device or within an application store of the device.

Optionally, the derived one or more keys may be stored within the device and associated with the session identifier. The keys may also be generated whenever required to reduce storage requirements.

Preferably, the derived one or more keys may be stored within the server. The keys may also be generated whenever required.

Preferably, the cryptographic material may include RAND and AUTN. Therefore, cellular cryptographic techniques may be used.

Optionally, the session identifier may include data indicating a purpose of the one or more key. This adds to the complexity of the session identifier so a larger number of different keys can be generated for the same session identifier root (generated by the server).

Optionally, the software application may generate the session identifier from a session identifier root is received by the device from the server. The root may be uniquely generated by the server so that no two devices receive the same root.

Optionally, the message may include any one or more of:

data indicating a counter incremented each time the session identifier is used; and/or
an identifier of a serving network. The counter may be incremented (by the device) for each use of the session identifier root, use and/or application combination, for example.

Optionally, the method may further comprise the step of:
repeating the method steps to derive one or more new keys using a different session identifier. The session identifier may be changed based on use, application, and/or counter.

Optionally, the data describing the requested key may comprise any one or more of:

key number; and/or
key usage. These data are sent by the requester (e.g., a customer application) with the request. The data describing the key may include information determined by the requester. For example, this information can include a reason or use for the key (once derived), data determining a key number if multiple keys for the same use are to be generated (e.g., sequentially as an older key expires, a new key with a new number can be requested to replace it) or other information about the key. The data may be provided in a particular format, e.g., based on look-up table. Data encoded in this way can be sent as fewer bits or bytes.

Optionally, the key usage may comprise any one or more of:

general encryption key;
general integrity key;

application management key;
script protection key;
memory protection key; and
server key. Other uses for the key may be provided or defined in the request.

Optionally, the step of the software application generating a key label may further comprise compressing the data describing the requested key before incorporating it in the key label. For example, the key label may be defined as a code (e.g., two alphanumeric characters) representing attributes of the key label or portions of the key label.

Optionally, the step of the first server sending the one or more keys to the second server may further comprise the one or more keys being sent as a REST API response. The keys may be sent in response to an API call or other message. Other types of API may be used.

Optionally, the REST API response may further comprises an expiry datetime (date and/or time); and/or data describing the device (e.g., IMSI, key generation date or other data).

In accordance with a further aspect, there is provided a device comprising:

a secure element;
a processor; and
memory storing computer-executable instructions that, when executed by the processor, cause the device to:

generate a session identifier;
identify one of a plurality of group keys within the memory based on at least a portion of the session identifier;
send a message to a server encrypted using the identified group key, the message including the session identifier;
receive an authentication request from the server, the authentication request including cryptographic material and encrypted using the identified group key;
the secure element of the device authenticating the response (e.g., the response to message from the device, which can be the authentication request);
generate cryptographic material based on the message; and
the device deriving one or more keys from the cryptographic material and at least a portion of the session identifier.

In accordance with a further aspect, there is provided a system comprising:

the device, as described above; and
a server comprising:

a processor; and
memory storing computer-executable instructions that, when executed by the processor, cause the server to:

generate a session identifier root;
send the generated session identifier root to the device;
identify a group key from a plurality of group keys based on the session identifier root;
receive a message from the device, the message encrypted using the group key; and
generate one or more keys derived from cryptographic material and at least the session identifier root. The one or more keys may also be derived from the cryptographic material (e.g., obtained from a network operator or an HLR of a network operator based on the identity of the device) and further portions (or the whole) of the session identifier.

Optionally, the computer-executable instructions may further cause the server to retrieve the cryptographic material from a home location register based on an identifier of the device included in a session identifier within the received message.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to

perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

## Brief description of the Figures

The present invention may be put into practice in a number of ways and embodiments will now be described by way of example only and with reference to the accompanying drawings, in which:

FIG. 1 shows a flowchart of a method used to secure communications between a device and a server;

FIG. 1A shows a flowchart of a further method used to secure communications between a device and a server;

FIG. 2 shows a schematic diagram of an example computer system used to implement the method of Figure 1 and Figure 1A;

FIG. 3 shows a schematic diagram of a system including the device and server implementing the method of Figure 1 and Figure 1A;

FIG. 4 shows a sequence diagram illustrating the messaging used in the system of Figure 3 and Figure 1A;

FIG. 5 shows a schematic diagram illustrating the messaging between the device and the server of Figure 3;

FIG. 6 shows a schematic diagram illustrating the messaging between different components of the system of Figure 3;

FIG. 7 shows a schematic diagram illustrating the messaging between different components of the system of Figure 3;

FIG. 8 shows a table of different data objects used in the method of Figure 1 and Figure 1A;

FIG. 9 shows a schematic diagram illustrating the messaging between different components of the system of Figure 3;

FIG. 10 shows a comparison of existing messaging and the messaging used in the method of Figure 1 and Figure 1A;

FIG. 11 shows a graphical indication of the benefits of the method of Figure 1 and Figure 1A; and

FIG. 12 shows a schematic diagram illustrating the format of a session identifier used within the method of Figure 1.

It should be noted that the figures are illustrated for simplicity and are not necessarily drawn to scale. Like features are provided with the same reference numerals.

## Detailed description of the preferred embodiments

A secure element such as a universal integrated circuit card (UICC), a SIM, or an iSIM, contains a unique identifier in the form of an international mobile subscriber identity (IMSI) number and a related key. These are used to identify and authenticate individual mobile subscribers on a telecommunication network. Therefore, the UICC provides a source of trust for the device and the network.

As well as using the secure element to authenticate a subscriber with the telecommunication network, the secure element can also carry out other cryptographic functions. Furthermore, they are not limited to use within cell phones but provide security functions within other types of device, such as constrained devices. Therefore, secure elements can both provide access to a communication channel on the telecommunication network and separate security functions. SIM Trust is a set of tools and application programming interfaces (APIs) that allow third parties to make use of such security functionality, which takes advantage of the high security provided by the telecommunication network for other authentica-

tion and communication processes (e.g., payment, fraud prevention, identity verification, etc.).

The described techniques and systems also take advantage of the UICC authentication functionality in a similar way to SIM Trust and can also use SIM Trust servers. This provides a similar high level of trust even for constrained devices.

Constrained devices and Narrow Band IoT (NB-IoT) devices, in particular have stringent battery and power requirements and also need to communicate in low signal areas. NB-IoT does not support either SMS or TCP/IP but does support UDP/IP. As current secure platforms for use with IoT or "Economy of Things" (e.g., payments) such as the Digital Asset Broker are generally based on HTTP, which itself only supports TCP/IP, support for UDP/IP may need to be added to these platforms so that constrained devices can be integrated. One consequence of this is that the packets sent are not acknowledged at the IP transport layer, so additional acknowledgement capability is needed at the application layer where this feature is important.

Two standards-based techniques enable this requirement to be achieved: CoAP CoAP; and 3GPP TS 33.163 BEST (Battery Efficient Secure Transport for MTC devices). CoAP uses DTLS for the security layer which is a public key-based security mechanism (Public Keys should be used to prevent man in the middle attacks). BEST was designed for use with network authentication-based security. BEST does not disguise the IMSI at security setup so additional work is required to protect the IMSI.

PKI requires significant overheads and so is not suitable from use with constrained devices. Because of its lower overheads, BEST has been chosen as the way to provide UDP support. To minimise the impact of this change on the server design and to fill in gaps that are not specified in the BEST specification, features of GBA and BEST may be combined to provide advantages of both solutions.

Many of the use cases highlighted below do not have access to a mains supply or generated battery supply (such as in a vehicle). Freight container tracking, environmental monitoring, transportation condition monitoring, asset tracking and post box utilisation use cases are particularly likely to have tight battery requirements.

Battery constrained devices need to power off for large periods of time and are therefore likely to lose their IP address and/or port number. As many protocols are keyed on IP address and/or port number, this causes many security session handshakes, which require additional system resources. Modem modules used in battery constrained devices are able to maintain their RAM, whilst in low power or standby mode.

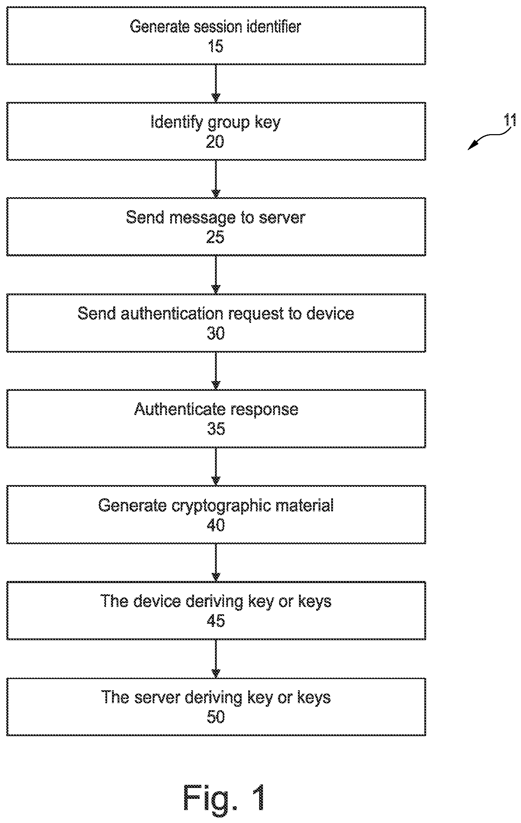

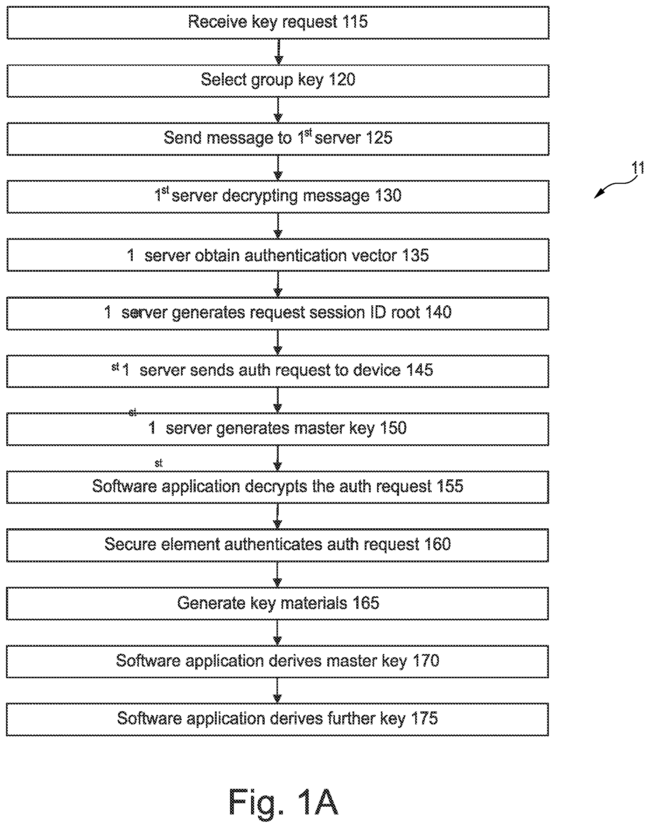

Figure 1 shows a flowchart of a method 10 for providing secure communications between a device and a server. The flowchart illustrates this method 10 at a high level. Further details are provided throughout this disclosure. The flowchart of Figure 1 shows the method 10 as a simplified method according to an example implementation.

At step 15, a software application on the device generates a session identifier. The session identifier may be based on data received from an external source (e.g., the server) and/or from data or information already available to the device. For example, the session identifier may be based on a session identifier root provided to the device by the server, the particular software application being used (there may be one or more software applications on the device), a particular use (e.g., messaging, signing, etc.), and/or a counter (i.e., the number of times a particular combination of the earlier components of the session identifier have been used by the device).

At step 20, the software application selects one of a plurality of group keys available to the software application (e.g., forming part of the software application) based on at least a part of the session identifier. For example, this may be the session identifier root provided by the server. The selection may be made in any number of ways. For example, the session identifier root may be processed using an algorithm (e.g., checksum) to provide an identifier or number corresponding to one of the group keys.

At step 25, a message is sent from the device to the server. The message is encrypted using the group key identified or selected in step 20. The message also includes or is sent with the session identifier.

At step 30, the server sends a response to the message. This response is an authentication request also encrypted using the group key. This response (authentication request) is received by the device.

At step 35, the response (authentication request) is itself authenticated by the device. A secure element (e.g., UICC, SIM, or iSIM) of the device carries out the authentication. Authentication may be achieved using SIM Trust, for example.

At step 40 and following successful authentication at step 35, the software application generates cryptographic material based on the message content, including the session identifier. An algorithm may be used to generate the cryptographic using the session identifier or at least a portion of the session identifier as a starting point.

At step 45, the software application of the device derives a key or set of keys based on the cryptographic material. At step 50, the server also derives the same key or set of keys from the cryptographic material and at least a portion of the session identifier. However, the server can obtain the cryptographic material from an HLR (or other component of a communications network) associated with the device. The message may contain an encrypted identifier or the device and/or a network associated with or serving the device so that the correct HLR can be identified. The key or set of keys can be used to secure communications between the device and the server, for example. The key or set of keys may also be used to sign messages communicated between the device and the server or carry out other data verification. Commu-

nications may be achieved using a cellular network or another network (e.g., wired or wireless such as WiFi). The method may be implemented using one or more computer systems 200. The software application may also be described as a software development kit (SDK). A central server may implement other functions, such as software updates, distribution to devices, and maintenance.

Figure 1A shows a flowchart of a further method 11 for providing secure communications between the device and a second server by sharing keys between the device and the second server using a first server. The flowchart illustrates this method 11 in more detail to the method 10 described with reference to Figure 1. Further details are provided throughout this disclosure.

The device contains a software application and a secure element (UICC or SIM). The first server provides cryptographic services for a plurality of second servers (customer servers). The first server interacts with a home location register (HLR) to obtain authentication vectors for particular SIMs on individual devices. The device also contains a customer application associated with the second server. The device described with reference to Figure 1A is one of a plurality of devices served by the HLR, first server and second server.

The customer application on the device generates a request for a key. This request may be triggered so that the customer application can provide a secure service to the device or the user of the device (e.g., to provide a service requiring a payment). The software application (e.g., SIM Trust SDK) on the device receives this request from the customer application at step 115. The request includes or is accompanied by data describing the requested key (e.g., its intended use, an identifier of the requesting server, and/or a number or iteration of the key if similar keys have been requested before), and a requester secret shared between the customer application and the second server. This requester secret may be pre-shared. The request may be triggered if there is no existing key or if an existing key has expired.

In response to the request for the key, the software application selects one of a plurality of group keys (e.g., from within the software application or stored on the device) at step 120 and generates a session identifier to be associated with the group key in a subsequent message. The session identifier also identifies the group key (e.g., contains an identifier of the group key). The device encrypts the message using the selected group key and sends the encrypted message to the first server at step 125. The message includes the session identifier and an identifier of the secure element (e.g., its international mobile subscriber identity (IMSI)).

At step 130, the first server decrypts the message from the device using the identified group key (the first server has access to the group key either from the second server or from a data store available to the first server). In response to the message, the first server obtains an authentication vector based on the identifier of the secure element (IMSI of the SIM) at step 135. The authentication vector is obtained from the HLR. The authentication vector includes key materials (e.g., Ck, Ik or Kasme) and an authentication request (e.g., in the form of RAND and AUTN). The first server also generates a request session identifier root at step 140. This can be used to generate a plurality of request session identifiers (e.g., when keys expire or need to be regenerated).

The first server uses the same group key (associated with or identified by the session identifier) to encrypt a response to send to the device. The response is formed from the authentication request (e.g., RAND and AUTN) and the request session identifier root. The first server sends the response to the device at step 145. The first server also uses the key materials (obtained from the HLR) to generate a master key at step 150.

The device receives the response, and the software application decrypts the response using the group key (previously selected) at step 155 and sends the authentication request (included within the response) to the secure element. The authentication request takes the form of a cellular authentication, which is normally authenticated by a SIM. The secure element authenticates the authentication request at step 160 by using keys already shared with the HLR and stored within the secure element (SIM). During the authentication process, the secure element generates key materials (e.g., Ck and Ik or Kasme) using the keys stored within the secure element (SIM) at step 165.

The secure element passes the key materials to the software application, which uses them to derive a master key (step 170). The master key and the request session identifier root are stored by the software application on the device (e.g., within secure storage or in encrypted form). The software application can use the stored master key, the data describing the key use, and the requester secret to generate further keys as and when they are required (step 175).

The master key may have an expiry time or date or other mechanism to make it invalid. As long as the master key remains valid, further different keys can be generated and steps 120 to 170 do not need to be repeated. However, at intervals or when the master key expires, these steps can be repeated to generate a new master key. Codes or data representing the key usage can be used as a root to generate new keys. When the same usage is required then a counter can be used to combine with these codes or characters to form a different root and so different keys can be generated. This information can be sent to the second server. The second server can receive the key or keys derived from the master key, the key label and the requester secret from the first server, e.g., over an application programming interface (API) or preferably by sending a REST API request from the second server to the first server, which provides the derived key or keys as a REST API response.

Communications may be achieved using a cellular network or another network (e.g., wired or wireless such as WiFi). The method may be implemented using one or more computer systems 200. The software application may also be

described as a software development kit (SDK). A central server may implement other functions, such as software updates, distribution to devices, and maintenance.

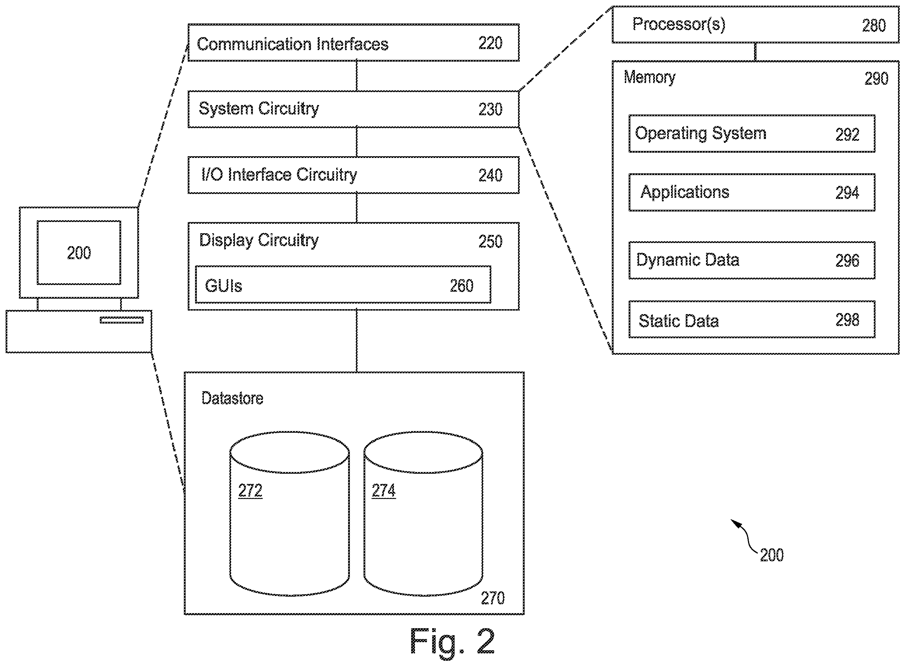

As shown in Figure 2, the computer system 200 includes a number of components including communication interfaces 220, system circuitry 230, input/output (I/O) circuitry 240, display circuitry and interfaces 250, and a datastore 270. The system circuitry 220 can include one or more processors or CPUs 280 and memory 290. The system circuitry 230 may include any combination of hardware, software, firmware, and/or other circuitry. The system circuitry 130 may be implemented, with one or more systems on a chip (SoC), application specific integrated circuits (ASIC), microprocessors, and/or analogue and digital circuits.

The display circuitry may provide one or more graphical user interfaces (GUIs) 260 and the I/O interface circuitry 240 may include touch sensitive or non-touch displays, sound, voice or other recognition inputs, buttons, switches, speakers, sounders, and other user interface elements. The I/O interface circuitry 240 may include microphones, cameras, headset and microphone input /output connectors, Universal Serial Bus (USB) connectors, and SD or other memory card sockets. The I/O interface circuitry 240 may further include data media interfaces (e.g., a CD-ROM or DVD drive) and other bus and display interfaces. However, many constrained devices will not contain a GUI or I/O interface to reduced complexity and improve battery life.

The memory 290 may include volatile (RAM) or non-volatile memory (e.g., ROM or Flash memory). The memory may store the operating system 292 of the computer system 200, applications or software 294, dynamic data 296, and/or static data 298. The datastore or data source 270 may include one or more databases 272, 274 and/or a file store or file system, for example.

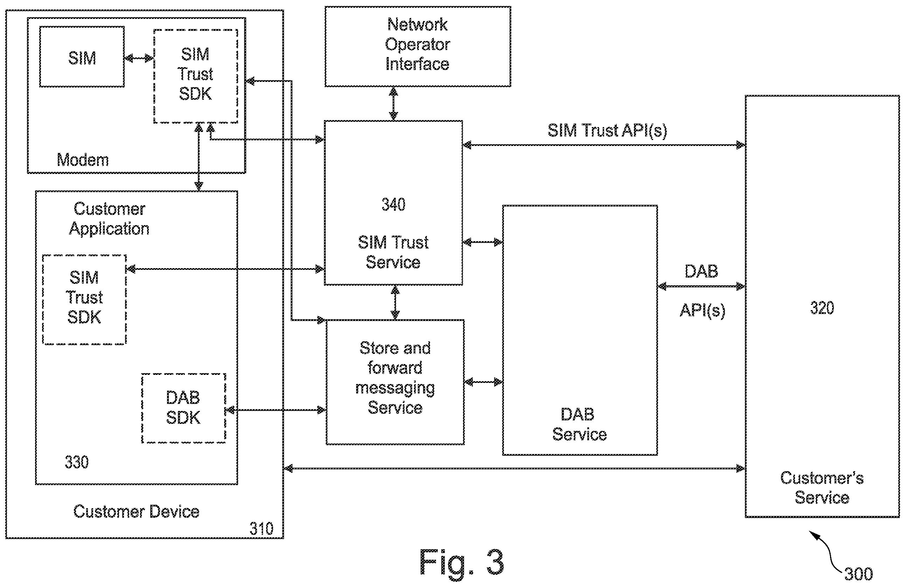

Figure 3 shows a schematic diagram of a system 300 for implementing the method 10 and method 11 described with reference to figures 1 and 1A. In this figure, the device 310 is shown as a customer device, the first server is shown as the SIM Trust Service 340 and the second server is shown as the customer's service 320. A customer may have many devices and may have separate servers for different functions or for load balancing. The message flow and communications between the device 310 and the server 320 make use of application programming interfaces (APIs) and other intermediate components (both hardware and software). For example, the server 320 obtains the cryptographic material from the HLR within the network operator using the SIM Trust service and associated APIs. Messages flow between the device 310 and the server 320 using a digital asset broker (DAB) service or intermediate broker. Such messages may be stored and verified by the DAB service to provide additional functionality, verification and storage. Annex 1 (including in this disclosure) describes the functionality of the APIs in more detail. These may be REST APIs.

The software application 330 may include separate SDK for cryptographic and non-cryptographic functions.

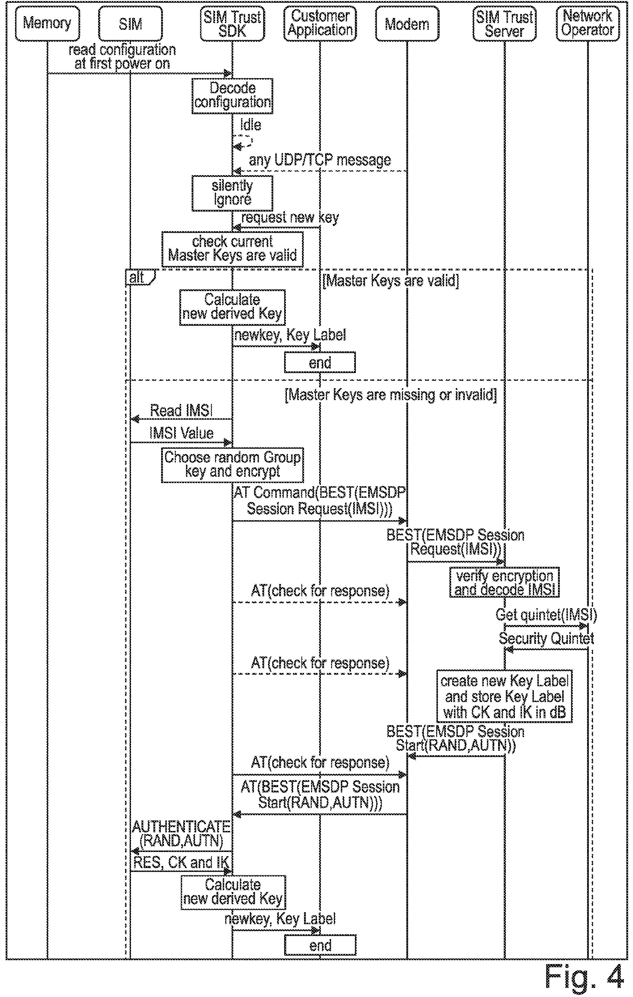

Figure 4 shows a sequence diagram illustrating the message flow and functionality of an example implementation of the method 10 or method 11 described with reference to Figure 1. In this diagram, the memory, SIM, SIM Trust SDK, Customer Application and Modem are software or hardware components of the device 310. The SIM Trust Server is the server 320 and the Network Operator comprises the HLR, which provides the cryptographic material to the server 320 in the form of a quintet. Throughout the disclosure, the session identifier may be described as a BTID (with reference to the BEST standard).

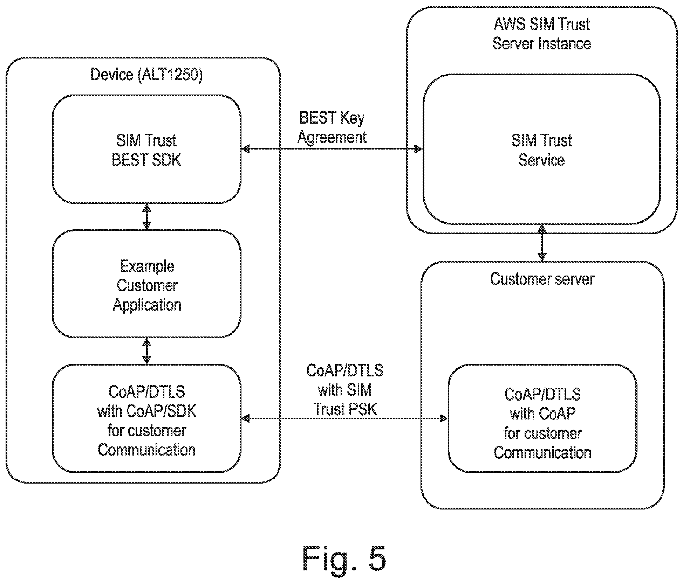

Figure 5 shows a schematic diagram of a further example implementation of the system for implementing the method 10 or method 11 described with respect to Figures 1 and 1A. The customer server (server 320) may be hosted in a virtual environment, for example.

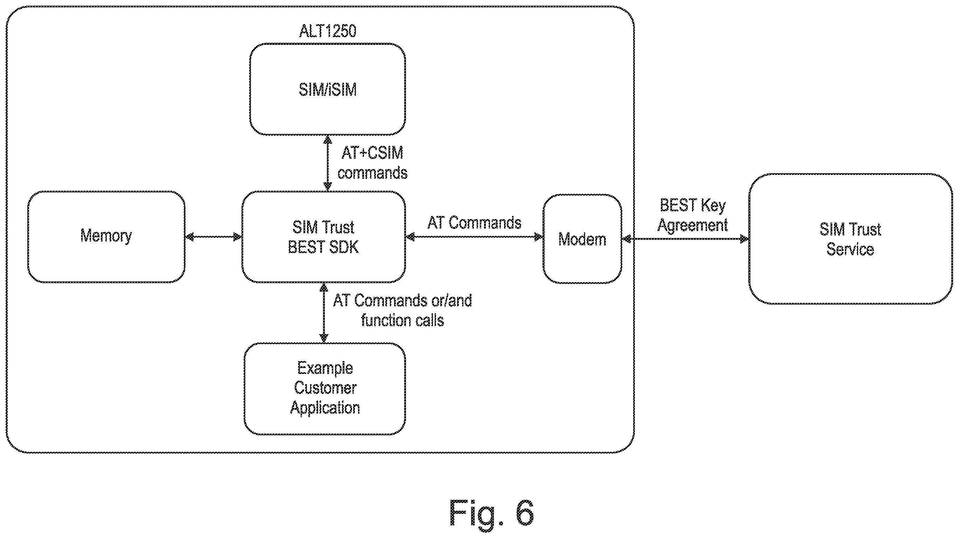

Figure 6 shows a schematic diagram of the device interfaces:

SIM Trust SDK - SIM/iSIM interface

This interface is almost the same as for the current SIM Trust platform. This uses the serial AT coms interface and the AT+CSIM command.

SIM Trust SDK - Modem Interface

An AT command serial interface communicates via the modem to the SIM trust service. The messages sent over this interface are based on BEST (3GPP TS 33.163). SIM Trust messages originate from the device (so it does not need a permanent listener).

SIM Trust SDK - Customer Application

A fixed set of functions and parameters are defined such that these can be relied on for production service.

SIM Trust SDK - Memory

Secret Materials and Provisioning Materials may be stored on insecure memory (encrypted at rest).

Main Flow Diagram (without OTA)

sequenceDiagram

participant MEM as Memory
participant SIM as SIM
participant SDK as SIM Trust SDK
participant CA as Customer Application
participant M as Modem
participant STS as SIM Trust Server
participant NO as Network Operator
MEM ->>SDK: read configuration<br>at first power on note over SDK:

Decode<br>configuration
SDK-->>SDK: Idle
M-->>SDK: any UDP/TCP message
note over SDK: silently<br>Ignore
CA->>SDK: request new key
note over SDK:check current<br>BTID is valid
alt BTID is valid

note over SDK: Caluculate<br>new Key
SDK->>CA: newkey, new BTID
note over CA: end

else BTID missing or invalid

SDK->>SIM: Read IMSI
SIM->>SDK: IMSI Value
note over SDK: Choose random Group<br>key and encrypt
SDK>>M: AT Command(BEST(EMSDP Session<br>Request(IMM->>STS: BEST(EMSDP Session<br>Request(IMSI))
note over STS: verify encryption<br>and decode IMSISDK-->>M: AT(check for response)
STS->>NO: Get quintet(IMSI)
NO->>STS: Security Quintet
SDK-->>M: AT(check for response)
note over STS: create new BTID<br>and store BTID<br>STS->>M:

BEST(EMSDP Session<br>Start(RAND,AUTN))
SDK->>M: AT(check for response)
M->>SDK: AT(BEST(EMSDP Session<br>Start(RAND,AUTN)))SDK->>SIM: AUTHENTICATE(RAND,<br>AUTN)
SIM->>SDK: RES, CK and IK
note over SDK: create new<br>device specific key
SDK->>CA: newkey, new BTID
note over CA: end

end

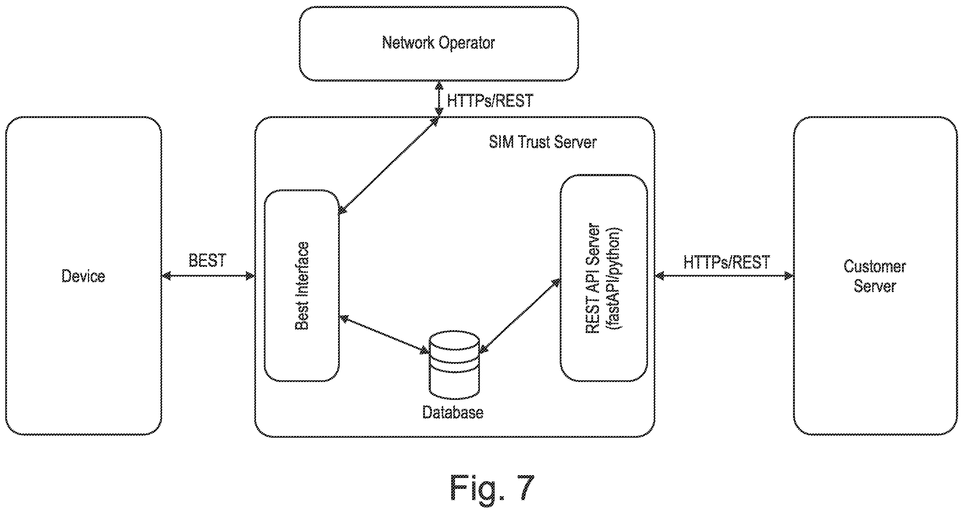

Figure 7 illustrates schematically the SIM Trust Server and the server interfaces. For example, the server type may be an AWS instance running Ubuntu Other operating systems and cloud providers may be used. The following example ports are used:

| Protocol | Connected to | Purpose |
|---|---|---|
| TLS/TCP | FastAPI | Deliver Server side REST API server for customer REST calls. |
| UDP | BEST Interface | Communication with SIM Trust BEST SDK over UDP/IP |
| TCP | BEST Interface | Communication with SIM Trust BEST SDK over TCP/IP |

Server SIM Trust BEST Interface:

In this example, the server SIM Trust BEST interface is delivered by a python3 program (SIM-Trust-Server-Device-Side.py). It listens on a UDP port) and/or a TCP port (for TCP traffic). All communication over these ports is encrypted, tamper protected and replay protected using the BEST protocol (3GPP TS 33.163) as specified in: Constrained Device Interface Key Concepts

SIM-Trust-Server-Device-Side.py communicates with the HLR to get network authentication vectors (quintets) and with database to store and retrieve BTID and key information, and to validate device status and parameters.

Database:atabase is used for the example implementation.

Database Name: Withheld
Tables: KeySet, Devices, Users, Companies,: used to store the key materials vs. IMSI

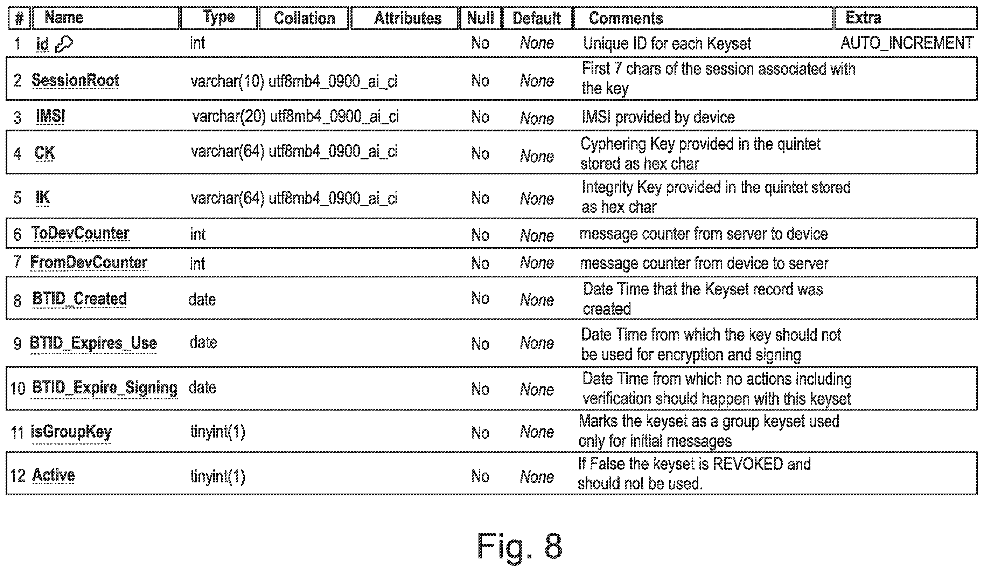

Figure 8 provides example data attributes used by the system and method.

Server SIM Trust Customer Facing REST API

A Customer facing REST API is provided to deliver services.

This API only communicates internally with the database. This interface is matched with the current example SIM Trust REST interface.

Annex 1 describes example REST APIs

Customer App and Server provide:

Key Retrieval - both Encryption key and integrity key.

Signing and encrypting data - the data is both signed and encrypted.

Signing data only - the data has been both signed but not encrypted.

Encrypting data - for secure local storage in insecure memory.

Decrypting data - for secure local storage in insecure memory).

Shows the following functions at the Server:
Key Retrieval - both Encryption key and integrity key.

Signing and encrypting data - both signed and encrypted can be retrieved only by and decrypted by authorised users.

Verification of data - show that data has been signed and that only authorised users can verify.

Demonstrates constrained device use case(s). (e.g. push service is not required)

MAY demonstrate messaging server for OTA or push services

Able to be used to prove that the solution works for NB-IoT (UDP) and CAT-M (TCP) interchangeably.

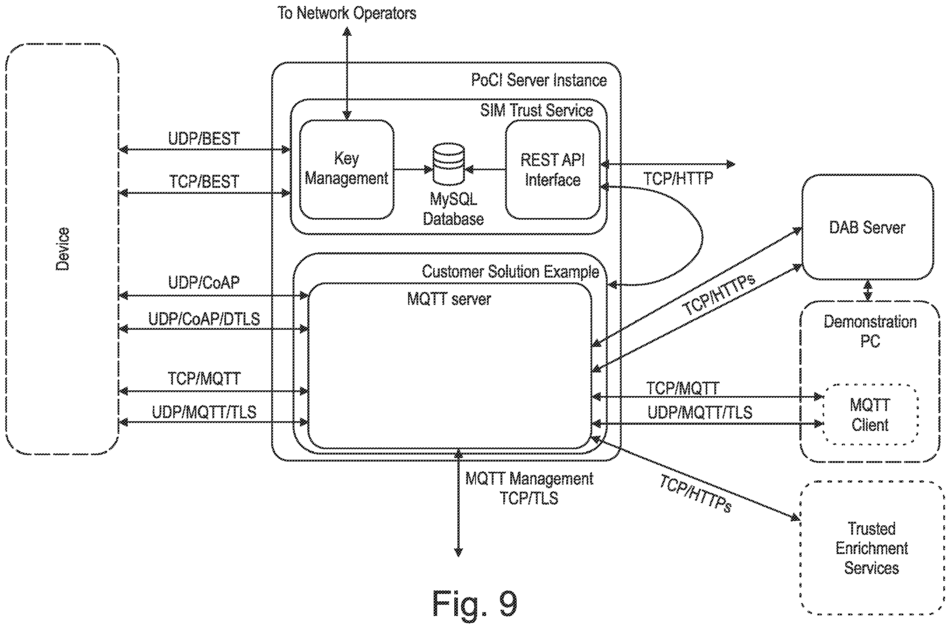

Figure 9 shows schematically an example server design.

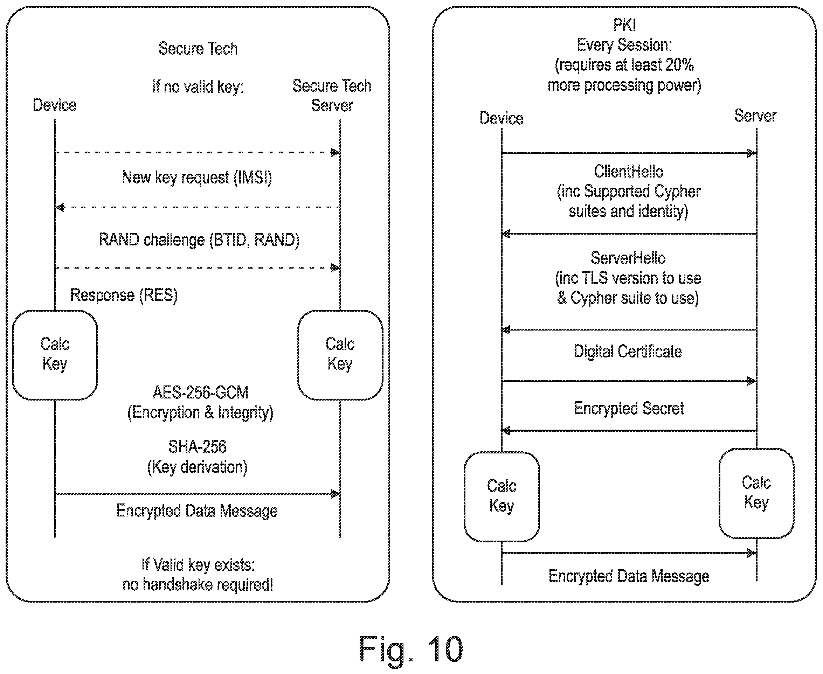

Figure 10 show a schematic diagram comparing the messages sent between a device and server in a system based on PKI (right side of figure) and the messages sent between a device 310 and server 320 in the present system 300. It is noted that more messages are required (and for every session) for the PKI-based system. Even if no valid key exists in the current system 300 (i.e., this is a first contact between device 310 and server 320) then fewer messages are required. If a valid key has already been exchanged, then handshaking messages are not required either in the current system 300. This demonstrates improved efficiency of the present system 300, method 10 and method 11.

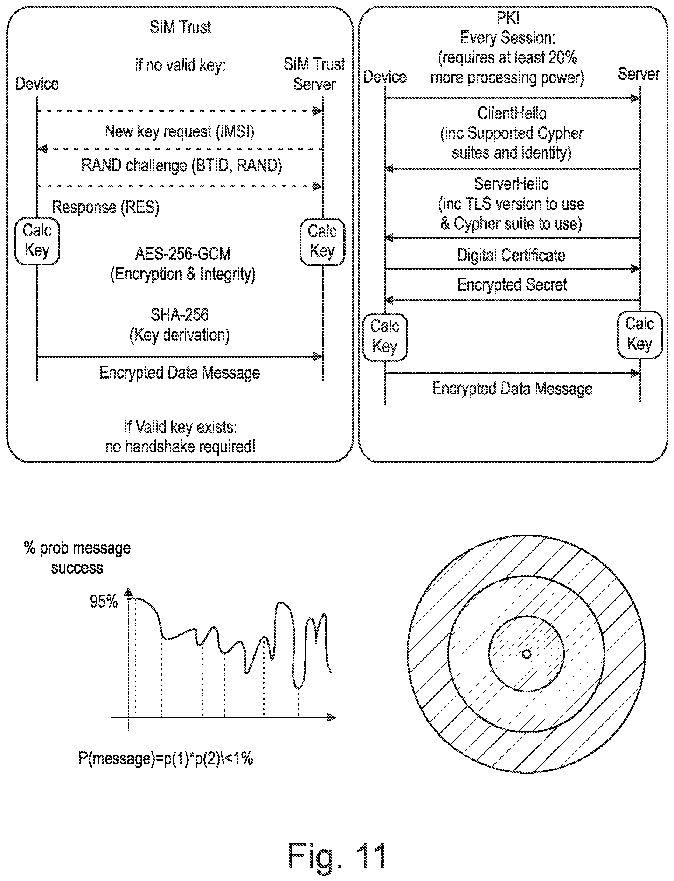

Figure 11 further illustrates improvements of the present system 300, method 10 and method 11. The graph on the top right of this figure illustrates schematically the probability of success of a single message (y-axis) and number of messages/time (x-axis). Due to network and radio reliability constraints, not every message will be successful. All messages need to succeed for key agreement success or the process needs to repeat.

The concentric circles at the bottom of figure 11 illustrate schematically the coverage of a base station or other radio transmitter providing services to a device 310. Each circle provides the same level of reliability (on an arbitrary scale). This diagram is not to scale but shown for illustrative purposes. For the PKI system, as six messages are required then the coverage will be lower (smallest circle) as more messages reduces the coverage for the same level of reliability. The middle

circle represents the coverage (for the same level of reliability) of an initial communication between the device 310 and the server 320. This is larger than the coverage for PKI because fewer messages are required as the probabilities of success for each message multiplies.

The largest or outer circle represents the coverage (for an equivalent reliability) when the handshaking messages are not required. This is the greatest coverage because only a single message is required. The device 310 and server 320 can generate a new key or keys based on a session identifier with the same root but including different other data components (e.g., counter, application, use, etc.). New key or keys are generated (providing the same level of security) without requiring the initial messages.

For NB-loT Constrained devices:

Key Agreement is achieved through UDP/BEST communications channel. The Session ID and the key value is written to a specific MQTT message channel and may be viewed using an MQTT Client. The SIM Trust API docs page (SIM Trust REST API - Swagger UI) may be used to fetch the key - it can then be compared with the one supplied by the Device.

Specific Data Encryption sent via unencrypted CoAP may be achieved through UDP/CoAP channel - data privacy and tamper protected end to end, over a less secure channel. The data may be encrypted and signed at the device and results in an encrypted blob. The encrypted blob and the unencrypted data may be written to a specific MQTT message channel and viewed using the MQTT Client. The SIM Trust API docs page may be used to decode the encrypted blob and it may then be compared to the unencrypted data.

For CAT-M constrained devices:

Key Agreement is achieved through TCP/BEST/ communications channel.

Data Encryption sent via unencrypted MQTT may be achieved through TCP/MQTT/.

Data Signing sent via unencrypted MQTT may be achieved through TCP/MQTT

To satisfy this goal several battery consuming effects need to be considered:

- Security session renegotiation due to new IP address and port details every communication.
- The consequences of the device being in "standby" or "off" for most of the time.
- Battery power consumed by the DAB and/or SIM Trust processing.
- Battery power consumed when updating the DAB Software over the air.

Security Session Renegotiation: The 3GPP TS 33.163 BEST (Battery Efficient Secure Transport for MTC devices) protocol has the benefit that it is secured against the SIM Identity (IMSI) not the IP address and port. This means that the modem can end a data session and start a new session sometime later with no need to renegotiate the DTLS security channel as long as the client has at least one valid BEST session ID, counters and keys.

Device in "standby" or "off": The existing design relies on SMS to trigger device actions from the server, this means that the modem needs to be active and listening to the paging channel which consume power. This design introduces a concept of device polling when it would be naturally communicating anyway (saving power). The present improved concept may include a message store on the DAB service which delivers, stores and delivers messages to the device when it actively communicates. This can either occur on a timed basis or by a device app triggering it. The message store prevents messages being lost if the SMS does not deliver (which can happen in low coverage areas).

DAB / SIM Trust Processing: The design may be optimised to use processing light security mechanisms (e.g., AES) and only to use one mechanism. It is appropriate just to use AES as a basis for security. This is very compact, quick to operate, is quantum computing safe and there is no need for an alternative algorithm as this is deemed strong. Note: AES is the basis of most mobile security and so is hardware accelerated and power optimised in modem software.

DAB Software Updates: Typical battery constrained devices are hard to deliver software updates to as these updates can use significant battery power potentially significantly shortening the life of the product. To cope with this a device end scripting capability is specified that allows functionality to be added to a device without the need for a software update.

Many constrained devices use a separate microprocessor system and modem as the modem part requires reasonable technical skill to implement well. The separate microprocessor system is typically both processor and memory constrained so the DAB device SDK size and processing requirements may be a significant burden.

Two separate design aspects assist in optimising this solution for memory and processor constrained devices: minimal library requirements and in-module design approach.

Minimal Library: The design uses a single AES-256 core algorithm for all security processes which is implementable in a very compact way.

In-module design: The whole of the device end of the solution is designed so that the device SDK could be in

either the modem or the modem module rather in the device. This has some added benefits:

- It is more secure for the code to be in the modem (more secure) or the modem module (most secure).
- It is easier to optimise the battery consumption when the SDK is aware of the modem power saving.
- The modem has many of the key libraries used by the device SDK hardware accelerated for speed, security and power optimisation.
- The modem already is mandated to support FOTA (Firmware over the air) updates, so there is no need for a separate process to manage bug fixes and it is possible to download the SDK to devices already in the field.
- Having the SDK in the modem means that it is not taking up memory and processing resources of the device.

Subkey generation using same BTID

In existing systems, every time a key is requested, a GBA exchange is used that produces a single 256 bit key. The device is currently optimised to give the same BTID / key combination if the device already knows a valid BTID for the application ID requesting it (NAF_ID). However, no control over the NAF_ID is implemented so it is possible for an application to get the secret for one application by presenting its NAF_ID and even to emulate another NAF_ID. Furthermore, when using a new NAF ID, a new BTID is mandated which adds a time delay, increases battery use and uses capacity of the roaming service communication, e.g., VRS (Vodafone Roaming Services).

From a practical point of view, the customer cannot easily just use the key generated as they most likely will need two keys, one for encryption / decryption and one for integrity protection. This means they will need to implement a key transformation mechanism or split the GBA key in two giving only 128bit security.

The present solution has a built-in key derivation function (the similar to the one used for the GBA key calculation) that is used to derive further keys. These keys are isolated by key type, key number, NAF_ID and whether it is for the current system use or not. This solution is matched in the SIM Trust API to make it easy for the customer to get the relevant keys.

AT commands

Most modems use an AT command interface to control the modem and in many cases to pass data to and from the modem and the device. To make the SDK easy to integrate into the modem, a Common AT command set is needed so that the access to present service is consistent across many modem types and manufacturers.

This goal only effects the device 310. As part of the device requirements, an AT command set is specified that allows the device to easily access the updated SIM Trust services. The specified AT Command set may also be used as a template for offering a similar interface over similar protocols between the device and the modem.

Multiple BTIDs live per device

If the existing SIM Trust server only holds one BTID per device so a second key request that results in a new BTID will effectively invalidate the first BTID (most likely significantly before it would have expired). This also creates a race condition under the following conditions:

Two or more applications using SIM trust in the same device: When the second application requests a key a new BTID will be generated. If the first applications server has not fetched the key for the first BTID before this happens, the server will never be able to supply the key as it will have lost the BTID and its keys. This race condition means that every application will need to be aware of other applications using updated SIM Trust.

A single application requiring multiple keys: It is normal for an application that is both confidentiality protecting and integrity protecting data to use two separate keys for each function. By asking for a second key, the application will invalidate the first key. It is also normal to use different keys where a device is communicating with a different entity. To manage this, the customer may implement their own key derivation function or have complex signalling with the server so it knows to fetch the first key before the second is fetched. However, both of these options are not customer friendly.

Device: This goal only has a minor effect on the device 310, the device 310 needs to be able to store multiple BTIDs / keys / NAF_ID sets until they expire or until they are forgotten. These should not be stored in non-volatile memory (Flash, EEPROM, FRAM...).

Server: The server may keep a record of all valid (session identifiers) BTIDs and their associated key(s), NAF_ID and Device ID. These BTIDs need to be stored until they expire or until they are invalidated (through the API) as they may be required at anytime by the customer's application server. As these keys may be stored for relatively long times, the keys should be securely stored at rest and access to the keys should be heavily restricted (to satisfy security requirements).

Device end cryptography functions (encrypt, integrity protect, replay protect, sign and verify)

The SDK provides several cryptographic functions (accessible by either SDK calls and/or AT commands) that use SIM Trust keys. The customer will not get the keys being used by these functions directly (as this has security implications).

For example the following functions could be supported:
Encryption: using AES-256-GCM. The customer may supply a valid BTID if they want to use the same key as for a previous encryption. The customer may supply a key number to indicate that the same key should be used as for a previous encryption.

Integrity Protect: using AES-256-GCM if encryption is also being carried out or AES-256-GMAC if only integrity protection is being carried out. The customer may supply a valid BTID if they want to use the same key as for a previous integrity calculation. The customer may supply a key number to indicate that the same key should be used as for a previous integrity calculation.

- Replay protection: Using transmit and receive counters for each transaction.
- Cryptographic signing of data: The ability to sign data using AES-256-GMAC
- Cryptographic verification of data: The ability to verify data using AES-256-GMAC

Device end scripting engine

A significant issue for solutions that have a remote device SDK is how to add functionality to it in the future. Every time a new software version is produced it adds another layer of legacy support requirements which very soon becomes very expensive to support.

Features may be added to the existing SDK without the need to reprogram the current SDK. The most efficient way to achieve this is by using scripting languages. The scripting language allows new services and feature to be added by just changing / adding to the server software.

This scripting language acquires device local information, process information, encrypt, sign, integrity protect information, package information, carryout local device actions and communicate with a central server.

The script may be either stored in the device and locally or remotely triggered by the platform or the scripts may be sent by the platform for immediate execution.

The central server may discover the scripting capabilities for the Device SDK.

Device: The device has the ability to store scripts locally in the device. Those script may be triggered by local events or as a result of a communications trigger. The scripts may process some inputs (including things like GPS values, device properties, timer expiry...) carry out data transformation and conditional statements and be able to out put the resulting data (or store it securely for later transmission).

Device end data collection means

The device end SDK can collect key device data (such as VIN number for vehicles) to enrich the provenance of data for specific services (such as EV charging).

The device may collect reference data from different sources.

Device end secure storage in non-secure memory

A key requirement in the new cybersecurity regulation is the secure storage of data at rest in the device. The encryption and decryption of data so it can be securely stored in insecure device memory is achieved by the updated SIM Trust service. The key issue is how to decrypt the stored data if the decryption key is lost. This may be achieved by retrieving it from the SIM Trust server (wrapped in a further key).

Device: A data wrapping and unwrapping service together with a request and receive mechanism allows the device to retrieve a key from the SIM Trust server.

Server: The device requests the key value and receives the key value for a previous data encryption session.

Server certificates

A security communications protocol between the central Server and the device is not based on public key cryptography but is still of a similar strength (for example BEST).

Zero provisioning

Zero Provisioning is about not having to customise the device provisioning for each device when they are produced. To make the SIM Trust (and DAB) simple to implement and provision, all of the provisionable information may be contained in the SDK, derived from a combinations of factors available at the device or SIM or be OTA-able to the device in an efficient and battery conserving way.

The BEST solution presented in this disclosure removes the need for server PKI and device PKI. Derivable suitable keys (group keys) are embedded in the software for all devices. These two items together mean that only the Device SDK software needs to be provisioned.

Zero touch

This means that the device does not need to be configured in operation and implies that the server can authenticate the device and remotely manage it efficiently. It is clearly important for an IoT device that all functions are achieved without user intervention.

OTA SDK Management capability

The needs to be an OTA mechanism that allows parameters and stored scripts for the Device SDK to be securely managed over the air.

Optimised messaging for constrained devices

For any battery or protocol constrained device, the number of messages sent and the size of the messages have a direct relationship to the battery life and reliability of the device.

Messages are as compact as can be and care taken not to have unnecessary multiple messages flows to deliver a service.

The use of TLVs to categorise and shrink messages may be used as well as other compaction techniques.

Keep alive for non-constrained devices

It is now common practice to keep PDP sessions active rather than repeatedly closing them and re-negotiating them (this saves core network processing time). The GSMA IoT Device Connection Efficiency Guidelines Version 3.0 30 March 2016 has guidelines for keep alives.

Secure coding requirements

Both the device and the server are strongly secure so that a wide range of customer solutions can be addressed.

IMSIs are always privacy protected

The very first message (key negotiation) from the device and any key negotiation message sent if the device does not have a valid key contains the IMSI (so that the server can determine who the device is). This is privacy protected.

The BEST implementation has the concept of pre-negotiated BTID key combinations that can only be used for initial key negotiation messages. These combinations can be updated securely by OTA, but even without updates, are still secure due to their infrequent use. To give separation between different customer risks, different combinations of these initial BTID / Key combinations may be compiled with different customer specific SDKs. The same initial BTID / Key combinations are used across a range of devices so at the server all of these combinations should be valid. The device may randomly pick an initial BTID / Key combination from its locally stored list of available combinations or this choice may be based on or otherwise encoded into the session identifier.

Reducing the number Quintets required

The consumption of quintets adds time delays and makes it more likely that MNOs might charge for this service in the future. By limiting the number of quintets used for the present services, the method and system improves the timing of our service, the reliability and lower the impact of our service on MNOs.

The following functions may be supported:

- Decryption: using AES-256-GCM with end padding to block size. The customer sets up a secure session and authenticates themselves. The customer then supplies the encrypted data, a valid BTID the key number and the NAF_ID. The API returns the decrypted data.
- Integrity Verification: using AES-256-GCM if encryption is also being carried out or AES-256-GMAC if only integrity protection is being carried out. The customer sets up a secure session and authenticates themselves. The customer then supplies the encrypted data, a valid BTID the key number and the NAF_ID. The API returns either "VALID" or "NOTVALID".
- Replay protection: Using transmit and receive counters for each transaction. The server maintains counters for each BTID / NAF_ID combination one for server to device and one for device to server (The counters for a new BTID / NAF_ID combination is 0). When replay protection is used together with either Decryption or Integrity verification, the process would error if the counter presented is less than the stored counter in the server. If a valid counter that is higher) is received, and the message is valid in all other respects, on completion of the processing of the message the counter shall be incremented to the value in the message. There may be a counter window to limit the possibilities of denial of service attacks.
- Cryptographic signing of data: The ability to sign data using AES-256-GMAC
- Cryptographic verification of data: The ability to verify data using AES-256-GMAC

Protect key generation such that customer app will never be able to generate keys used by the system 300.

For GBA, the calculated key for a specific BTID depends only on the supplied NAF_ID. There is currently nothing that prevents an application from using the same NAF_ID as the presently described services and therefore getting the same key.

The described system and method may include a flag that indicates whether the key generated is for use with the presently described system or for external use. This flag guarantees that the generated key will always be different even if the NAF_ID and BTID is the same.

Key type as a parameter of key generation so that different level of security can be maintained for different uses.

In current systems, the calculated key for a specific BTID depends only on the supplied NAF_ID. A key type may be added so that OTA keys for instance can be treated differently to script keys and are guaranteed to be different values.

The presently described system 300, method 10 and method 11 include a flag that indicates the key type.

The Device SDK to SIM Trust Device Interface is made up of several communication channels / purposes:

- Key agreement
- Device Management (OTA)
- Device script triggering
- Key retrieval
- DAB / Customer secure data channel

This uses BEST (Battery Efficient Secure Transport) as a basis for all five of these purposes.

The Key agreement will use the BEST control channel and the other four may use the BEST Data channel.

The BEST protocol can be transported over any bearer. The BEST protocol relies on lower layers managing the message routing (source and destination addresses) and the packetization of the BEST message.

BEST is detailed in 3GPP TS 33.163. (Rel.17 or later).

General BEST implementation

BEST messages are packets that have a security header and content that is either control messages or data.

BEST protects control messages or data using the following features:

- Session management
- Counter (to protect against replay attacks)
- Integrity Protection (optional)
- Encryption (optional)
- Authentication (during the key agreement process)

BEST has two packet structures - one for control messages and one for data messages:

| UP / CP Flag | RFU | Key ID | CP COUNTER | Session ID | EMSDP Command | Cmd Options | MAC |
|---|---|---|---|---|---|---|---|
| 1 bit | 1 bit | 3 bits | Note 4 | Note 1<br>Note 2 | Note 1<br>Note 2<br>Note 3 | Note 2<br>Note 3 | Note 1<br>Note 3 |

User Plane type 01 message:

| UP / CP Flag | RFU | Key ID | UP COUNTER | Session ID | Data Length | Data | MAC |
|---|---|---|---|---|---|---|---|
| 1 bit | 1 bit | 3 bits | Note 4 | Note 1<br>Note 2 | Note 1<br>Note 2<br>Note 3 | Note 2<br>Note 3 | Note 1<br>Note 3 |

Control Plane type 01 message:

Note 1: The length of these fields is indicated in the BEST HSE configuration TLV from the HSE.
Note 2: These fields are included in the integrity protection calculation.
Note 3: These fields are encrypted when encryption is used. When encrypted these fields are replaced by the encrypted output.
Note 4: The length of this field is as defined in the BEST Counter Scheme being used.

For both message types it is proposed to use the BTID (possibly with a shortened realm) as the Session ID.

| BEST Command | Description | Response if received by the Device | Response if received by the HSE (Server) |
|---|---|---|---|
| EMSDP Session | This message is used by | Message ignored | Reply with EMSDP |
| Request | the device to request a new session.<br><br>It conditionally contains an IMSI and is always encrypted and integrity protected using AES. | This command should only originate from a device. | Session Start if message is valid. |
| EMSDP Session Start | This message is used to send the new BTID and the authentication parameters associated with it | EMSDP Session Start Confirmation if message is valid | Message ignored This command should only originate from a HSE. |
| EMSDP Session Start Confirmation | This message sends the RES to the HSE | Message ignored This command should only originate from a device. | none - (end of sequence) |

(continued)

| BEST Command | Description | Response if received by the Device | Response if received by the HSE (Server) |
|---|---|---|---|
| EMSDP Session Terminate Request | NOT USED (as for SIM Trust there can only be one key per session ID) | Ignored | Ignored |
| EMSDP Session Terminate Response | | | |
| EMSDP Manage Keys Request | | | |
| EMSDP Manage Keys Response | | | |
| EMSDP Message Reject | | | |

To protect the IMSI, presently described system 300, method 10 and method 11 use a select number of global sessions that can only be used for the first message that includes IMSI when there is no other valid key.

New Key request (No previous session details known)

The EMSDP Session Request message is sent at any time, by the device 310, to generate a new session ID and keyset where no previous session details known. This could be because it is the first time this device has communicated with the server 320, because the previous session has expired, because the server rejected the previous session or because the previous session details have been lost by the device due an event such as a power cycle.

This message is only sent from the device 310 to the HSE (server 320). If the device 310 receives this message, it shall ignore it.

Message Format

An example message may be formed as follows:

| Parameter | Value | Comment |
|---|---|---|
| **UP / CP Flag** | 0 (1 bit) | Set to Control Pane message |
| **RFU** | 0 (1 bit) | Set as RFU |
| **Key ID** | [0...7] (3 bits) | Scheme key ID used |
| **CP COUNTER** | "001 00000001" as bits | Initial counter value (note server will ignore this value) |
| **Session ID** | <one of the preconfigured session IDs for that range of devices> | Indicates that this is a brand new session and that there are no valid available keys. |
| **EMSDP Command** | 10 (Hex) | EMSDP Session Request |
| **Cmd Options** | "0108"<IMSI><br>"0206<config parameters>"<br><br>"030100"<br>"0B03"<encoded serving network id> (all values as hex) | Where IMSI is as for IMSI TLV<br>AES indicated in config<br>Device to HSE<br>Serving network |
| **MAC** | 4 bytes | MAC calculated using indicated |

(continued)

| Parameter | Value | Comment |
|---|---|---|
| | | Scheme integrity Key and AES-256 algorithm. |

The encryption key used for this message may be the encryption key from one of the programmed scheme wide key sets, chosen randomly.

The integrity key used for this message is the integrity key from the same programmed scheme wide key set as the encryption key.

HSE Response

On receiving this message, the HSE (server 320) takes the following actions in an example implementation:

1. Verify that the message structure and size is valid
2. Decrypt the EMSDP Command, Cmd Options and MAC fields using EEA2 (128-AES) and the indicated scheme encryption key.
3. Verify that the message structure and size is valid for the EMSDP Command, Cmd Options, MAC fields and any padding.
4. Verify the Session ID, EMSDP Command and Cmd Options using the MAC, the EIA2 (128-AES) algorithm and the indicated scheme integrity key.
5. Retrieve the IMSI and check that it is a valid IMSI format and that it exists in the server
6. Fetch authentication parameters from the PLMN
7. Generate a new BTID (that is unique among active BTIDs on that server).
8. Generate reply: EMSDP Session Start using the same scheme keys as used for the EMSDP Session Request.

If any step fails other than step 8, the HSE aborts the key agreement process without sending anything to the device and logs the error internally as required.

New Key request (Previous session details known - no handshaking required).

The EMSDP Session Request message is sent at any time, by the device 310, to generate a new session ID and keyset where the previous session details known and are valid.

As the device 310 knows a valid current session ID and keyset, it uses that session ID for the EMSDP Session Request, its incremented counter value and encrypts and integrity protects the request using the key set associated with that session.

As the IMSI and support details are already known by the HSE (server side), the IMSI TLV may be just the Tag value and a zero length byte (0100hex) and the BEST UE configuration TLV, Enterprise Setup Information Element TLV shall be omitted. As encryption is used, the serving network TLV shall be present.

This message is only sent from the device to the HSE (server). If the device receives this message, it shall ignore it.

Message Format

An example message is formed as follows:

| Parameter | Value | Comment |
|---|---|---|
| **UP / CP Flag** | 0 (1 bit) | Set to Control Pane message |
| **RFU** | 0 (1 bit) | Set as RFU |
| **Key ID** | [0...7] (3 bits) | Session key ID |
| **CP COUNTER** | Encoded (last sent value +1) | As per TS 33.613 |
| **Session ID** | BTID string, encoded | ASCII encoded string of BTID with the upper bit set for all but the last byte. |
| **EMSDP Command** | 10 (Hex) | EMSDP Session Request |

(continued)

| Parameter | Value | Comment |
|---|---|---|
| **Cmd Options** | "0100"<br>"0B03"<encoded serving network id> (all values as hex) | No IMSI sent (server already knows this)<br>Serving network |
| **MAC** | 4 bytes | MAC calculated using indicated Scheme integrity Key and AES-256 algorithm. |

HSE Response

On receiving this message, the HSE (server 320) takes the following actions:

1. Verify that the message structure and size is valid
2. Decrypt the EMSDP Command, Cmd Options and MAC fields using EEA2 (256-AES) and the indicated session encryption key.
3. Verify that the message structure and size is valid for the EMSDP Command, Cmd Options, MAC fields and any padding.
4. Verify the Session ID, EMSDP Command and Cmd Options using the MAC, the EIA2 (256-AES) algorithm and the indicated session integrity key.
5. Retrieve the IMSI and check that it is a valid IMSI format and that it exists in the server
6. Fetch authentication parameters from the PLMN
7. Generate a new BTID (that is unique among active BTIDs on that server).
8. Generate reply: EMSDP Session Start using the same session keys as used for the EMSDP Session Request.

If any step fails other than step 8, the HSE aborts the key agreement process without sending anything to the device and logs the error internally as required.

EMSDP Session Start

The EMSDP Session Start message is sent by the HSE (server 320) to the device 310 to create a new session with associated BTID and keyset. This message may only be sent in response to a valid EMSDP Session Request message from the device 310.

For UDP based NB-loT use cases, this response may happen in less than 800ms.

The message is encrypted using the same encryption key used for the EMSDP Session Request message but it is integrity protected using integrity key from the new key set.

This message is only sent from the HSE (server) to the device. If the HSE (server) receives this message, it shall ignore it.

Message Format

An example message is formed as follows:

| Parameter | Value | Comment |
|---|---|---|
| **UP / CP Flag** | 0 (1 bit) | Set to Control Pane message |
| **RFU** | 0 (1 bit) | Set as RFU |
| **Key ID** | [0...7] (3 bits) | key ID used in the associated EMSDP Session Request |
| **CP COUNTER** | Encoded (last sent value +1) | As per TS 33.613 |
| **Session ID** | BTID string, encoded | ASCII encoded string of BTID with the upper bit set for all but the last byte. |
| **EMSDP Command** | 11 (Hex) | EMSDP Session Start |

(continued)

| Parameter | Value | Comment |
|---|---|---|
| **Cmd Options** | "0408<config parameters>"<br><br>"05241"<new key id as nibble>< RAND IE> <AUTN IE> (all values as hex) | BEST Service configuration TLV<br>Key agreement TLV |
| **MAC** | 4 bytes | MAC calculated using new session integrity Key and AES-256 algorithm. |

Device Response

On receiving this message, the device 310 takes the following actions:

1. Verify that the message structure and size is valid
2. Decrypt the EMSDP Command, Cmd Options and MAC fields using EEA2 (256-AES) and the encryption key used in the associated EMSDP Session Request.
3. Verify that the message structure and size is valid for the EMSDP Command, Cmd Options, MAC fields and any padding.
4. Send an authentication request to the SIM using the AUTN and RAND cantained in the key agreement TLV.
5. Check that the authenticate command completed successfully and that the RES, CK and IK were generated.
6. Create Ke2menc and Ke2mint as detailed for EPS in TS33.163. and bind them as a keyset with the BTID.
7. Verify the Session ID, EMSDP Command and Cmd Options using the MAC, the EIA2 (256-AES) algorithm and the new session integrity key(Ke2mint).
8. Generate reply: EMSDP Session Start Confirmation containing the RES secured using the new session keys.
9. Return the BTID, Ke2menc and Ke2mint to the requesting device application.

If any step fails other than steps 8 and 9, the device aborts the key agreement process without sending anything to the device and logs the error internally as required.

EMSDP Session Start Confirmation

The EMSDP Session Start Confirmation message is sent by the device to confirm to the HSE (server 320) that the authentication process completed successfully and contains the RES.

Note: this part of the process is optional, however it would be the customer who is the first to discover that the process failed which is not a good user experience.

This message is only sent from the device 310 to the HSE (server 320). If the device receives this message, it shall ignore it.

Message Format

An example message is formed as follows:

| Parameter | Value | Comment |
|---|---|---|
| **UP / CP Flag** | 0 (1 bit) | Set to Control Pane message |
| **RFU** | 0 (1 bit) | Set as RFU |
| **Key ID** | [0...7] (3 bits) | key ID used for the current session |
| **CP COUNTER** | Encoded (last sent value +1) | As per TS 33.613 |
| **Session ID** | BTID string, encoded | ASCII encoded string of BTID with the upper bit set for all but the last byte. |
| **EMSDP Command** | 12 (Hex) | EMSDP Session Start Confirmation |
| **Cmd Options** | "0C11"<RES> (all values as hex) | AUTHENICATION RESPONSE TLV |

(continued)

| Parameter | Value | Comment |
|---|---|---|
| **MAC** | 4 bytes | MAC calculated using new session integrity Key and AES-256 algorithm. |

HSE Response

On receiving this message, the device takes the following actions:

1. Verify that the message structure and size is valid
2. Decrypt the EMSDP Command, Cmd Options and MAC fields using EEA2 (256-AES) and the encryption key the current session.
3. Verify that the message structure and size is valid for the EMSDP Command, Cmd Options, MAC fields and any padding.
4. Mark the key distribution as successful.

If any step fails other than step 4, the HSE aborts the key agreement process and records the key agreement process as unsuccessful.

5.3.3 BEST Data Channel (OTA, Scripting, Key retrieval and DAB)

The BEST Data channel shall be used to deliver multiple types of content. To optimise the battery performance and reliability, the data portion of the BEST data channel message shall contain one or more BER TLVs (Tag, Length, Values as defined in ISO 7816 part 3) that contain specific content.

BER_TLVs have the following structure:

| Tag | Length | Value |
|---|---|---|

The following Tag values are defined for messages from the device to the HSE (Pairpoint is an example name of the platform):

| Tag Name | Description | Allowed in Customer message |
|---|---|---|
| Server Message Request | Triggers the message server to send any stored message to the device. | No |
| Key Request | Request the server to send a memory encryption key to the device | No |
| Customer Uplink Data | Encrypted customer data to be sent to the customer server. | Yes |
| Signed Customer Uplink Data | Signed customer data to be sent to the customer server. | Yes |
| Verification Response to Customer Data | Customer data verification response | Yes |
| OTA Response | Response to an OTA request from the server. | No |
| Script Triggered Message / Response | This is a device response from a script run in the device triggered either by the Server or by an event in the device. | No |
| DAB signature Response | This is a response to a DAB signature request. | No |

The following types of content are defined for messages from the HSE to the device:

| Tag Name | Description | Allowed in Customer message |
|---|---|---|
| Message waiting Trigger | Triggers the device to fetch messages from the message server | No |
| Key Response | Contains the response to a key request from the device. | No |
| Customer Encrypted Downlink Data | Encrypted customer data sent from the customer server for decryption. | Yes |
| Customer Downlink Data for signature | customer data to be signed locally at the device. | Yes |
| Customer Signed Downlink Data | Signed customer data sent from the customer server for verification. | Yes |
| OTA Request | An OTA configuration message | No |
| Device Script Trigger | Triggers a device stored script or contains a "do now" script. | No |
| DAB Signature Request | A data packet from DAB for signature | No |

The Length is one or more bytes as follows:
1 to 3 bytes as follows:

| Coding | Description |
|---|---|
| 00 to 7F | Length value between 0 and 127 bytes |
| 8100 to 81FF | Length value between 0 and 255 bytes |
| 820000 to 82FFFF | Length value between 0 and 65,535 bytes |

The value part is specific to the tag used. The value part may contain one or more TLVs with their own definition relevant to the TAG that they are contained in.

SIM Trust Key calculation

As discussed above, the key generated may vary based one or more of the following parameters:

- The keys negotiated with the SIM (labelled by BTID)
- The NAF_ID
- The key number
- The key type (enc, Int, sign, OTA, Script....)
- Source (Internal to the system or requested by customer)

As the Algorithm chosen is AES-256-GCM which has a need to make sure that the Nonce is unique for each key, the key number will be used as the Nonce. The Nonce shall be 12 bytes, for example. Every time a key is requested for a specific BTID the key number shall be incremented. When a new BTID is generated, the key number will be set to zero.
For example, the key calculation may be as based on 3GPP TS 33.220 Annex B.2.
derived key = HMAC-SHA-256 ( Key , S)
When calculating the derived key value, both the device SIM Trust SDK and the SIM Trust server shall use the following algorithm.
Where:
The Key may be CK ‖ IK (concatenated).
The S value is a string and shall be calculated as follows:

S=FC|NAFID|len(NAFID)| KEYTYPE|len(KEYTYPE)|SOURCE|len(SOURCE)

Where:

| | |
|---|---|
| Key requested by customer | FC = 0xF9 |
| Key Requested by SIM Trust | FC = 0xF8 |
| Key Requested by DAB | FC = 0xF7Len() - L0 ... Ln are the two-octet representations of the length of the corresponding input (as a string). |

NAFID string any length (A-Z,a-z,0-9,@_-#$! chars only) that uniquely identifies an application within that device. (it does not need to be unique across devices)

KEYTYPE is defined based on its intended use as follows:

- "Z" - General Encryption Key (in the case of AES-xxx-GCM this key will be used for both Encryption and integrity protection).
- "Y" - General Integrity Key
- "N" - SDK Management OTA Key (combined Encrypt / Integrity key as AES GCM is used.
- "D" - Script Protection Key
- "V" - Signing Key
- "K" - Memory Protection key

SOURCE is defined based on who requested it as follows:

- "A" - Pairpoint
- "B" - Customer

For example, the S value for an OTA key would be: "F8ANAPPLICATION000CZ0001A0001"

Device Scripting

The device may support a scripting mechanism that can be used in a variety of ways to deliver services.

The scripts may be:

- stored locally in the device and be triggered either by events in the device or remotely by the either the DAB or SIM Trust services.
- Sent by SIM Trust or DAB - In which case the script is run immediately but not stored.

Scripts may be compacted to save space in transit and to save space in the device. Scripts are stored encrypted and tamper proofed at rest when stored in persistent memory.

Script Principals

- Scripts may be autonomous and atomic.
- Scripts may have a priority that determines the order in which they will run for the same trigger.
- When multiple triggers occur, the scripts may run in the order of the triggers.
- Scripts may have a common set of actions they can use.
- Scripts may have local memory that survives only for the life of the script.
- Scripts may not be persistent - as in they should carry out one or more actions and end.
- Scripts may output to the persistent memory, SIM Trust service, DAB service or a customer service.
- The system includes a means of handling script errors.
- Scripts may only run if they have not been tampered with.

Getting script inputs from Customer applications or sensors

The ability to get inputs from the customers device and any attached sensors depends on the interface between the customer application and the SIM Trust SDK. The device may manage the acquisition of data and its presentation to the SDK.

At least two types of interface exist:

- AT Command Interface - Over this interface, the device is the master and the Modem is the slave. The device 310 can issue commands to the modem to which the modem gives responses. Additionally, the modem can send unsolicited messages but it cannot instruct the device 310.
- Function call interface - Over this interface, the device or the modem may be master. To cause an action functions need to be exposed at the modem and functions at the device. Functions may only me exposed by the modem for the device to consume in a similar manner to the AT Command interface. To assist this the functions should be named as equivalents to the AT commands.

Script Triggers

The following script triggers are defined:

- Modem (or device if the SDK is in the device) power on
- Network Connected
- Network Disconnected
- Device triggered - The device software triggers a script
- Named Pair updated by device - for instance the device has updated the VIN number value
- New IMSI detected
- Timer expiry
- Geofence event

A means to manage which events are triggers and which are ignored is implemented.

Script cryptography functions

The following cryptography functions are defined:

- Generate a new key
- Sign a payload
- Verify a payload
- Create a secure encrypted blob for transmission
- Decode a transmitted secure and encrypted blob
- Get a random number
- Create a secure encrypted blob for storage in insecure memory
- Decode a stored secure and encrypted blob

Script conditional actions

The following conditional functions are defined:

- If... Then... Else
- Case... Select...
- Equal to
- Not equal to
- Length of string
- Greater than
- Less than
- Mod
- AND
- OR
- EXOR

- NOT

Script transformation actions

The following transformation functions are defined:

- String to int
- Int to string
- Binary to Hex string
- Hex string to binary
- update string with repeated pattern
- add
- subtract
- multiply
- divide
- increment
- decrement
- Split string
- Concatenate string
- Find in string

Script memory access actions

The following memory functions are defined:

- Clear specified register
- Clear and update register
- Concatenated string to register
- Get specified register value
- Store value pair to secure memory
- Retrieve value pair from secure memory

Script looping actions

The following looping functions are defined:

- For... Loop...
- While... Loop...
- Break (from loop)

Script output actions

The following output functions are defined:

- Send Output to DAB
- Send Output to Device
- Return value to script caller
- Silently End script

Script Miscellaneous actions

The following miscellaneous functions are defined:

- Set timer

Script error handling actions

The following error handling functions are defined:

- Action on error
- Write to log register

New BTID / Session ID scheme

The current BTID generation creates long BTIDs that make a significant message overhead, particularly for communication and memory constrained devices. However, many systems are expecting a URI style session ID.

The scheme developed for this system and method includes the following properties:

- Session ID needs to be unique across the entire server
- Session ID needs to appear random (as in not sequential)
- Session ID can be numbers or letters (not case sensitive) - the letter O will not be used as it is too similar to zero (so there are 35 usable characters per position)
- Ideally Session ID should be based on a simple counter
- Session IDs will be generated in a server - The server will be responsible for checking for duplicates.
- Session IDs should include key number (2 characters gives possibility of 1225 keys)
- Session ID string shall be an ASCII string
- Session ID should be of the form <unique code>@ securetec.pairpoint.io - the best session will only need to send the <unique code>.
- The size of the running part of the session ID should be scoped so that 10,000,000 subscriptions can create 1 BTID every day (3650000000 BTIDs)

Possible solution:

The number of ASCII letters and numbers needed to represent the SHA256 output is 7.

Add 2 characters to represent the key number (gives 1225 possible keys)
Add 1 Character to represent the Server being used (allows for multiple servers)
We get 10 Character unique code as follows:
XXXXXXXKKS
Where:

XXXXXXX is BASE35(non repeating value that indicates a specific keyset)
KK is key number (sequential - assigned by the device)
S is server reference

This means that the BEST session ID needs only to be XXXXXXXKKS which is 10 chars.

The Base 35 coding scheme is as follows:

| Decimal Number | Coded Character | Decimal Number | Coded Character |
|---|---|---|---|
| 0 | 0 | 18 | I |
| 1 | 1 | 19 | J |
| 2 | 2 | 20 | K |
| 3 | 3 | 21 | L |
| 4 | 4 | 22 | M |
| 5 | 5 | 23 | N |
| 6 | 6 | 24 | P |
| 7 | 7 | 25 | Q |
| 8 | 8 | 26 | R |
| 9 | 9 | 27 | S |
| 10 | A | 28 | T |
| 11 | B | 29 | U |

(continued)

| Decimal Number | Coded Character | Decimal Number | Coded Character |
|---|---|---|---|
| 12 | C | 30 | V |
| 13 | D | 31 | W |
| 14 | E | 32 | X |
| 15 | F | 33 | Y |
| 16 | G | 34 | Z |
| 17 | H | | |
| Note: O may not used as it is too similar to zero. | | | |

An alternative base 57 coding scheme may be used:

| Decimal Number | Coded Character | Decimal Number | Coded Character |
|---|---|---|---|
| 0 | 0 | 29 | U |
| 1 | 1 | 30 | V |
| 2 | 2 | 31 | W |
| 3 | 3 | 32 | X |
| 4 | 4 | 33 | Y |
| 5 | 5 | 34 | Z |
| 6 | 6 | 35 | a |
| 7 | 7 | 36 | b |
| 8 | 8 | 37 | c |
| 9 | 9 | 38 | d |
| 10 | A | 39 | e |
| 11 | B | 40 | f |
| 12 | C | 41 | g |
| 13 | D | 42 | h |
| 14 | E | 43 | j |
| 15 | F | 44 | k |
| 16 | G | 45 | m |
| 17 | H | 46 | n |
| 18 | I | 47 | p |
| 19 | J | 48 | q |
| 20 | K | 49 | r |
| 21 | L | 50 | s |
| 22 | M | 51 | t |
| 23 | N | 52 | u |
| 24 | P | 53 | v |
| 25 | Q | 54 | w |
| 26 | R | 55 | x |
| 27 | S | 56 | y |

(continued)

| Decimal Number | Coded Character | Decimal Number | Coded Character |
|---|---|---|---|
| 28 | T | 57 | z |

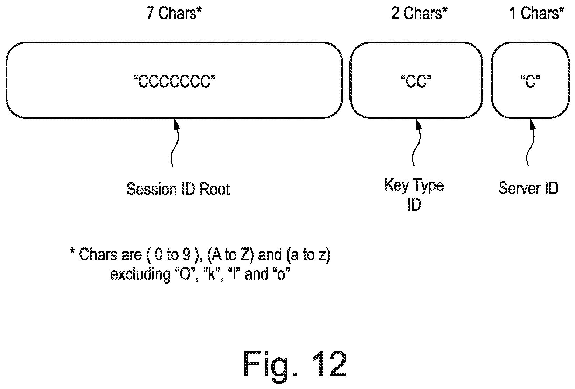

Other base coding schemes may be used. Figure 12 shows a schematic diagram of an example session identifier derived from the session ID root and data describing the key. In this example, the data describing the key includes a key type ID and a server ID. The key type ID is encoded using the base 35 code table, base 57 code table, or any other base value code table. The server ID may be data (or a code) identifying the requesting server (second server or customer service 320).

Different key types or usage may be defined and used within the session ID. These may include but are not limited to:

"K" - (000) - Key Agreement;
"E" - (001) - General Encryption Key (in the case of AES-xxx-GCM this key will be used for both Encryption and integrity protection);
"I" - (010) - General Integrity Key;
"D" - (011) - SDK Management OTA Key (combined Encrypt / Integrity key as AES GCM is used;
"Q" - (100) - Script Protection Key;
"M" - (101) - Memory Protection key; and
"S" - (110) - Server sign or encrypt key (not to be used by device).

The key type codes shown above may be further encoded.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, where a single device is shown, many similar or different devices may be included in the system. Similarly, many different servers (having similar functionality) may be included in the system for different customers.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

**ANNEX** 1

API descriptions and functional details.

**Pairpoint SIM Trust REST API** 0.1 OAS 3.1 /openapi.json

These docs cover the functional and management REST APIs for the Constrained Device Pairpoint SIM Trust Server

These REST APIs are split into 2 sections:

**Functional**

The functional REST APIs allow customers to perform the following SIM Trust cryptographic related actions:

- **retrieveTrustKey3** - Retrieves a SIM Trust key based on the customer ID, Application ID and SaessionLabel (provided for that key).
- **verifyData3** - Verifies data based on Customer Id, Application ID, the data to be verified and the signatureblob.
- decryptDataBlob3 - Decrypts a data blob and returns both it and a validity flag based on Customer Id, Application ID and the encryptedblob.

**Management**

The management REST APIs allow customers to perform the following adminastrative functions:

**To Be Added**

**Functional APIs** The functional REST APIs allow customers to perform SIM Trust cryptographic related actions.

POST
/m2m/network/sim/retrieveTrustKey3/
Retrievetrustkey3
This API returns the Key used by the Device for that session ID, when that key will expire and the associated IMSI
Parameters
Try it out
No parameters
Request body
required
application/json
Example Value
Schema
{
"applicationId": "string",

```
  "KeyId": "string"
}
```

**Responses**

| Code | Description | Links |
|---|---|---|
| 200 | Successful Response | *No links* |

Media type

**application/json**

Controls Accept header.

**Example Value** Schema

```
{
  "keyMaterialHexStr": "string",
  "expirationTimestampUTC": "string",
  "IMSI": "string"
}
```

| Code | Description | Links |
|---|---|---|
| 422 | Validation Error | *No links* |

Media type

**application/json**

**Example Value** Schema

```
{
  "detail": [
    {
      "loc": [
        "string",
        0
      ],
      "msg": "string",
      "type": "string"
    }
  ]
}
```

POST `/m2m/network/sim/verifyData3/` Verifydata3

This validates the data passed against the signatureblob passed for the key indicated by the session ID

**Parameters** Try it out

No parameters

**Request body** required **application/json**

**Example Value** Schema


```
{
  "applicationid": "string",
  "datatobeverified": "string",
  "signatureblob": "string"
}
```


**Responses**

| Code | Description | Links |
|---|---|---|
| 200 | Successful Response<br>Media type<br>**application/json**<br>Controls Accept header.<br>**Example Value** Schema<br>`{ "dataisvalid": true }` | *No links* |
| 422 | Validation Error<br>Media type<br>**application/json**<br>**Example Value** Schema | *No links* |


```
{
  "detail": [
    {
      "loc": [
        "string",
        0
      ],
      "msg": "string",
      "type": "string"
    }
  ]
}
```


POST `/m2m/network/sim/decryptDataBlob3/` Decryptdatablob3

This API decodes and returns the data based on the submitted encrypted datablob, the customer ID and the application ID and

**Parameters** Try it out

No parameters

**Request body** required

**application/json**

**Example Value** Schema

```
{
  "deviceId": "string",
  "applicationId": "string",
  "datatobeencrypted": "string",
  "datatobetamperprotectedonly": "string"
}
```

**Responses**

| Code | Description | Links |
|---|---|---|
| 200 | Successful Response<br>Media type<br>**application/json**<br>Controls Accept header.<br>**Example Value** Schema<br>`{ "encrypteddataheader": "string", "encrypteddatavalue": "string", "encrypteddatatag": "string" }` | *No links* |
| 422 | Validation Error<br>Media type<br>**application/json**<br>**Example Value** Schema<br>`{ "detail": [ { "loc": [ "string", 0 ], "msg": "string", "type": "string" } ] }` | *No links* |

POST **/m2m/network/server/encryptDataBlob3/** Encryptdatablob3

This API encrypts the submitted data and returns an encrypted datablob. If an applicationId is not supplied the applicationId will be set to 'SIMTRUST_SERVER'.

**Parameters** Try it out

No parameters

**Request body** required application/json

**Example Value** Schema


```
{
  "deviceId": "string",
  "applicationId": "string",
  "datatobeencrypted": "string",
  "datatobetamperprotectedonly": "string"
}
```


**Responses**

| Code | Description | Links |
|---|---|---|
| 200 | Successful Response | *No links* |

Media type

application/json

Controls Accept header.

**Example Value** Schema


```
{
  "encrypteddataheader": "string",
  "encrypteddatavalue": "string",
  "encrypteddatatag": "string"
}
```


| Code | Description | Links |
|---|---|---|
| 422 | Validation Error | *No links* |

Media type

application/json

**Example Value** Schema


```
{
  "detail": [
    {
      "loc": [
        "string",
        0
      ],
```

| Code | Description | Links |
|---|---|---|


```
        "msg": "string",
        "type": "string"
      }
    ]
  }
```


POST /m2m/network/server/signData3/ Signdata3

This API signs the submitted data and returns a header and signature tag. If an applicationId is not supplied the applicationId will be set to 'SIMTRUST_SERVER'.

**Parameters** Try it out

No parameters

**Request body** required application/json

**Example Value** Schema


```
{
  "deviceId": "string",
  "applicationId": "string",
  "datatosign": "string"
}
```


**Responses**

| Code | Description | Links |
|---|---|---|
| 200 | Successful Response | *No links* |

Media type

application/json

Controls Accept header.

**Example Value** Schema


```
{
  "encrypteddataheader": "string",
  "encrypteddatatag": "string"
}
```


| Code | Description | Links |
|---|---|---|
| 422 | Validation Error | *No links* |

Media type

application/json

| Code | Description | Links |
|---|---|---|
| | Example Value Schema | |


```
{
  "detail": [
    {
      "loc": [
        "string",
        0
      ],
      "msg": "string",
      "type": "string"
    }
  ]
}
```


**Management APIs** The management REST APIs allow customers to perform adminastrative functions.

Schemas

HTTPValidationError ^ Collapse all object

- detail ^ Collapse all array<object>
  - Items ^ Collapse all object
    - loc* ^ Collapse all array<(string | integer)>
      - Items ^ Collapse all (string | integer)
        - Any of ^ Collapse all (string | integer)
          - #0 string
          - #1 integer
    - msg* string
    - type* string

KeyRequest3InType ^ Collapse all object

- applicationId* string
- KeyId* string

KeyRequest3OutType ^ Collapse all object

- keyMaterialHexStr* string
- expirationTimestampUTC* string
- IMSI* string

**ValidationError** ^ Collapse all **object**

- loc* ^ Collapse all array<(string | integer)>
  - Items ^ Collapse all (string | integer)
    - Any of ^ Collapse all (string | integer)
      - #0 string
      - #1 integer
- msg* string
- type* string

**encryptDataBlob3InType** ^ Collapse all **object**

- deviceId* string
- applicationId ^ Collapse all (string | null)
  - Any of ^ Collapse all (string | null)
    - #0 string
    - #1 null
- datatobeencrypted* string
- datatobetamperprotectedonly* string

**encryptDataBlob3OutType** ^ Collapse all **object**

- encrypteddataheader* string
- encrypteddatavalue* string
- encrypteddatatag* string

**signData3InType** ^ Collapse all **object**

- deviceId* string
- applicationId ^ Collapse all (string | null)
  - Any of ^ Collapse all (string | null)
    - #0 string
    - #1 null
- datatosign* string

**signData3OutType** ^ Collapse all **object**

- encrypteddataheader* string
- encrypteddatatag* string

**verifyData3InType** ^ Collapse all **object**

- applicationId* string

datatobeverified* string

signatureblob* string

verifyData3OutType ^ Collapse all object

dataisvalid* boolean

## Claims

1. A method for sharing keys between a device (310) and a second server (320), the device (310) having a secure element and a software application (330) comprising a plurality of group keys and associated session identifiers, the method comprising the steps of:

   the software application (330) receiving from within the device (310) a request for a key, data describing the requested key and a requester secret shared with the second server (320);
   in response to the request for the key, the software application (330) selecting one of the plurality of group keys and an associated session identifier;
   the device (310) sending a message to a first server (340) encrypted using the selected group key, the message being sent with the associated session identifier and an identifier of the secure element;
   the first server (340) decrypting the message using the group key identified by the associated session identifier;
   in response to the message the first server (340):

      obtaining an authentication vector based on the identifier of the secure element, the authentication vector comprising key materials and an authentication request,
      generating a request session identifier root,
      encrypting, using the group key associated with the session identifier, a response formed from the authentication request and the request session identifier root,
      sending the response to the device (310), and
      generating a master key based on the key materials;

   the software application (330) decrypting the response using the selected group key and sending the authentication request to the secure element;
   the secure element authenticating the authentication request and when valid generating the key materials from the authentication request and a key stored within the secure element;
   the software application (330) deriving the master key based on the generated key materials;
   storing within the device (310) the master key with the request session identifier root;
   the software application (330) deriving one or more keys based on the master key, the data describing the requested key and the requester secret;
   the software application (330) generating a key label for each of the one or more keys comprising the request session identifier root and the data describing the requested key;
   the device (310) sending the one or more key labels to the second server (320);
   the second server (320) sending the one or more key labels and the requester secret to the first server (340);
   the first server (340) deriving the one or more keys based on the master key, the one or more key labels and the requester secret; and
   the first server (340) sending the one or more keys to the second server (320).

2. The method of claim 1, wherein the secure element is a universal integrated circuit card, UICC, a hardware security module, or an integrated SIM, iSIM; and/or
   wherein the software application (330) is executed within the secure element of the device (310) or within an application store of the device (310).

3. The method of claim 1 or claim 2 further comprising the step of the device (310) and the second server (320) securing

communications using the one or more keys, wherein optionally:

the step of the secure element of the device (310) authenticating the response further comprises the secure element generating a response, RES, based on the key materials and further wherein securing the communications includes sending RES to the second server (320); and/or
wherein the communications are secured using advanced encryption standard, AES.

4. The method according to any previous claim further comprising one or more of:

a step of the device (310) and/or the second server (320) signing a message using the one or more keys;
wherein the plurality of group keys are pre-shared keys common to a plurality of separate devices;
wherein a secure hash algorithm, SHA, is used to derive the one or more keys;
wherein the derived one or more keys are stored within the device (310) and associated with the session identifier;
wherein the derived one or more keys are stored within the first and/or second server (320); and
wherein the session identifier includes data indicating a purpose of the one or more key.

5. The method according to any previous claim, wherein the group key used to encrypt the message and/or the response to the message is any one of:

a previously generated key, wherein the message is sent with a session identifier associated with the previously generated key; or
a pre-shared key.

6. The method according to any previous claim, wherein the session identifier includes an encrypted identifier of the device (310), wherein optionally:

the encrypted identifier of the device (310) is the device international mobile subscriber identity, IMSI; and/or
the first server (340) obtains the authentication vector from a home location register, HLR, based on the identifier of the device (310).

7. The method according to any previous claim, wherein the message further comprises an identifier of the serving network and an MEI of the device (310);

wherein the message is sent with the associated session identifier by including the associated session identifier in the message in an unencrypted portion of the message; and/or
wherein the message includes any one or more of:

data indicating a counter incremented each time the session identifier is used; and
an identifier of a serving network.

8. The method according to any previous claim, wherein the authentication vector includes RAND and AUTN.

9. The method according to any previous claim further comprising the step of:
repeating the method steps to derive one or more new keys using a different session identifier.

10. The method according to any previous claim, wherein the data describing the requested key comprises any one or more of:

key number; and/or
key usage, wherein optionally the key usage comprises any one or more of:

general encryption key;
general integrity key;
application management key;
script protection key;
memory protection key; and
server key.

**11.** The method according to any previous claim, wherein the step of the software application (330) generating a key label further comprises compressing the data describing the requested key before incorporating it in the key label.

**12.** The method according to any previous claim, wherein the step of the first server (340) sending the one or more keys to the second server (320) further comprises the one or more keys being sent as a REST Application Programming Interface, API, response, wherein optionally the REST API response further comprises an expiry datetime; and/or data describing the device (310).

**13.** A device (310) comprising:

a secure element;
a processor; and
memory storing computer-executable instructions that, when executed by the processor, cause the device (310) to:

receive, by a software application (330) from within the device (310), a request for a key, data describing the requested key and a requester secret shared with a second server (320);
in response to the request for the key, the software application (330) selecting one of a plurality of group keys and an associated session identifier;
send a message to a first server (340) encrypted using the selected group key, the message being sent with the associated session identifier and an identifier of the secure element;
receive from the first server (340) a response to the message, the response including an authentication request and a request session identifier root;
decrypt the response using the selected group key and sending the authentication request to the secure element;
the secure element authenticating the authentication request and when valid generating key materials from the authentication request and a key stored within the secure element;
derive, by the software application (330), a master key based on the generated key materials;
storing within the device (310) the master key with the request session identifier root;
the software application (330) deriving one or more keys based on the master key, the data describing the requested key and the requester secret;
the software application (330) generating a key label for each of the one or more keys comprising the request session identifier root and the data describing the requested key; and
the device (310) sending the one or more key labels to the second server (320).

**14.** A system comprising:

the device (310) of claim 13; and
a first server (340) comprising:

a processor; and
memory storing computer-executable instructions that, when executed by the processor, cause the first server (340) to:
in response to a message received from the device (310):

obtain an authentication vector based on the identifier of the secure element, the authentication vector comprising key materials and an authentication request,
generate a request session identifier root,
encrypt, using the group key associated with the session identifier, a response formed from the authentication request and the request session identifier root,
send a response to the device (310),
generate a master key based on the key materials,
receive from a second server (320) one or more key labels and a requester secret,
derive the one or more keys based on the master key, the one or more key labels and the requester secret, and
send the one or more keys to the second server (320).

**15.** The system of claim 14, wherein the computer-executable instructions further cause the first server (340) to retrieve

the authentication vector from a home location register based on an identifier of the device (310) included in a session identifier within the received message.

## Patentansprüche

1. Verfahren zum Teilen von Schlüsseln zwischen einer Vorrichtung (310) und einem zweiten Server (320), wobei die Vorrichtung (310) ein sicheres Element und eine Softwareanwendung (330) aufweist, welche eine Vielzahl von Gruppenschlüsseln und verknüpften Sitzungskennungen umfasst, wobei das Verfahren die folgenden Schritte umfasst:

    Empfangen einer Anforderung nach einem Schlüssel, Daten, welche den angeforderten Schlüssel beschreiben, und einem Anforderergeheimnis, welches mit dem zweiten Server (320) geteilt wird, von innerhalb der Vorrichtung (310) durch die Softwareanwendung (330);
    als Reaktion auf die Anforderung nach dem Schlüssel, Auswählen von einem aus der Vielzahl von Gruppenschlüssel und einer verknüpften Sitzungskennung durch die Softwareanwendung (330);
    Senden einer Nachricht an einen ersten Server (340), welche mit dem ausgewählten Gruppenschlüssel verschlüsselt ist, durch die Vorrichtung (310), wobei die Nachricht mit der verknüpften Sitzungskennung und einer Kennung des sicheren Elements gesendet wird;
    Entschlüsseln der Nachricht unter Verwendung des Gruppenschlüssels, welcher durch die verknüpfte Sitzungskennung identifiziert wird, durch den ersten Server (340);
    wobei als Reaktion auf die Nachricht der erste Server (340):

        einen Authentifizierungsvektor basierend auf der Kennung des sicheren Elements erhält, wobei der Authentifizierungsvektor Schlüsselmaterialien und eine Authentifizierungsanforderung umfasst,
        eine Anforderungssitzungskennungswurzel generiert,
        unter Verwendung des mit der Sitzungskennung verknüpften Gruppenschlüssels eine aus der Authentifizierungsanforderung und der Anforderungssitzungskennungswurzel gebildeten Antwort verschlüsselt,
        die Antwort an die Vorrichtung (310) sendet, und
        einen Masterschlüssel basierend auf den Schlüsselmaterialien generiert;

    Entschlüsseln der Antwort unter Verwendung des ausgewählten Gruppenschlüssels und Senden der Authentifizierungsanforderung an das sichere Element durch die Softwareanwendung (330);
    Authentifizieren der Authentifizierungsanforderung und, wenn gültig, Generieren der Schlüsselmaterialien und eines in dem sicheren Element gespeicherten Schlüssels aus der Authentifizierungsanforderung durch das sichere Element;
    Ableiten des Masterschlüssels basierend auf den generierten Schlüsselmaterialien durch die Softwareanwendung (330);
    Speichern des Masterschlüssels mit der Anforderungssitzungskennungswurzel innerhalb der Vorrichtung (310);
    Ableiten eines oder mehrerer Schlüssel basierend auf dem Masterschlüssel, der Daten, welche den angeforderten Schlüssel beschreiben, und des Anforderergeheimnisses durch die Softwareanwendung (330);
    Generieren einer Schlüsselbezeichnung, umfassend die Anforderungssitzungskennungswurzel und die Daten, welche den angeforderten Schlüssel beschreiben, für jeden des einen oder der mehreren Schlüssel durch die Softwareanwendung (330);
    Senden der einen oder mehreren Schlüsselbezeichnungen an den zweiten Server (320) durch die Vorrichtung (310);
    Senden der einen oder mehreren Schlüsselbezeichnungen und des Anforderergeheimnisses an den ersten Server (340) durch den zweiten Server (320);
    Ableiten des einen oder der mehreren Schlüssel basierend auf dem Masterschlüssel, der einen oder der mehreren Schlüsselbezeichnungen und des Anforderergeheimnisses durch den ersten Server (340); und
    Senden des einen oder der mehreren Schlüssel an den zweiten Server (320) durch den ersten Server (340).

2. Verfahren nach Anspruch 1, wobei das sichere Element eine Universal Integrated Circuit Card, UICC, ein Hardware-Sicherheitsmodul oder eine integrierte SIM, iSIM, ist; und/oder
wobei die Softwareanwendung (330) innerhalb des sicheren Elements der Vorrichtung (310) oder innerhalb eines Anwendungsspeichers der Vorrichtung (310) ausgeführt wird.

3. Verfahren nach Anspruch 1 oder Anspruch 2, weiter den Schritt des Sicherns von Kommunikationen unter Ver-

wendung des einen oder der mehreren Schlüssel durch die Vorrichtung (310) und den zweite Server (320) umfassend, wobei optional:

der Schritt des Authentifizierens der Antwort durch das sichere Element der Vorrichtung (310) weiter Generieren einer Antwort, RES, basierend auf den Schlüsselmaterialien durch das sichere Element umfasst, und wobei weiter Sichern der Kommunikationen Senden von RES an den zweiten Server (320) beinhaltet; und/oder wobei die Kommunikationen unter Verwendung von Advanced Encryption Standard, AES, gesichert werden.

**4.** Verfahren nach einem vorstehenden Anspruch, weiter eines oder mehrere der folgenden umfassend:

einen Schritt des Signierens einer Nachricht unter Verwendung des einen oder der mehreren Schlüssel durch die Vorrichtung (310) und/oder den zweiten Server (320);
wobei die Vielzahl von Gruppenschlüsseln vorab geteilte Schlüssel sind, welche einer Vielzahl von separaten Vorrichtungen gemeinsam sind;
wobei ein Secure Hash Algorithm, SHA, verwendet wird, um den einen oder die mehreren Schlüssel abzuleiten;
wobei der eine oder die mehreren abgeleiteten Schlüssel in der Vorrichtung (310) gespeichert und mit der Sitzungskennung verknüpft sind;
wobei der eine oder die mehreren abgeleiteten Schlüssel innerhalb des ersten und/oder zweiten Servers (320) gespeichert sind; und
wobei die Sitzungskennung Daten beinhaltet, welche einen Zweck des einen oder der mehreren Schlüssel angeben.

**5.** Verfahren nach einem vorstehenden Anspruch, wobei der Gruppenschlüssel zum Verschlüsseln der Nachricht verwendet wird und/oder die Antwort auf die Nachricht eine der folgenden ist:

ein zuvor generierter Schlüssel, wobei die Nachricht mit einer Sitzungskennung gesendet wird, welche mit dem zuvor generierten Schlüssel verknüpft ist; oder
ein vorab geteilter Schlüssel.

**6.** Verfahren nach einem vorstehenden Anspruch, wobei die Sitzungskennung eine verschlüsselte Kennung der Vorrichtung (310) beinhaltet, wobei optional:

die verschlüsselte Kennung der Vorrichtung (310) die International Mobile Subscriber Identity, IMSI, der Vorrichtung ist; und/oder
der erste Server (340) den Authentifizierungsvektor aus einem Home Location Register (HLR) basierend auf der Kennung der Vorrichtung (310) erhält.

**7.** Verfahren nach einem vorstehenden Anspruch, wobei die Nachricht weiter eine Kennung des versorgenden Netzwerks und eine IMEI der Vorrichtung (310) umfasst;

wobei die Nachricht mit der verknüpften Sitzungskennung gesendet wird, indem die verknüpfte Sitzungskennung in der Nachricht in einem unverschlüsselten Teil der Nachricht beinhaltet ist; und/oder
wobei die Nachricht eines oder mehrere der folgenden beinhaltet:

Daten, welche einen Zähler angeben, welcher jedes Mal erhöht wird, wenn die Sitzungskennung verwendet wird; und
eine Kennung eines versorgenden Netzwerks.

**8.** Verfahren nach einem vorstehenden Anspruch, wobei der Authentifizierungsvektor RAND und AUTN beinhaltet.

**9.** Verfahren nach einem vorstehenden Anspruch, weiter den folgenden Schritt umfassend:
Wiederholen der Verfahrensschritte, um einen oder mehrere neue Schlüssel unter Verwendung einer anderen Sitzungskennung abzuleiten.

**10.** Verfahren nach einem vorstehenden Anspruch, wobei die Daten, welche den angeforderten Schlüssel beschreiben, eines oder mehrere der folgenden umfassen:

Schlüsselnummer; und/oder

Schlüsselverwendung, wobei die Schlüsselverwendung optional eine oder mehrere der folgenden umfasst:

allgemeiner Verschlüsselungsschlüssel;
allgemeiner Integritätsschlüssel;
Anwendungsmanagementschlüssel;
Skriptschutzschlüssel;
Speicherschutzschlüssel; und
Serverschlüssel.

**11.** Verfahren nach einem vorstehenden Anspruch, wobei der Schritt des Generierens einer Schlüsselbezeichnung durch die Softwareanwendung (330), weiter Komprimieren der Daten, welche den angeforderten Schlüssel beschreiben, vor deren Einbindung in die Schlüsselbezeichnung umfasst.

**12.** Verfahren nach einem vorstehenden Anspruch, wobei der Schritt des Sendens des einen oder der mehreren Schlüssel an den zweiten Server (320) durch den ersten Server (340) weiter das Senden des einen oder der mehreren Schlüssel als eine Antwort einer REST Application Programming Interface, API, umfasst, wobei die REST-API-Antwort optional ein Ablaufdatum und eine Ablaufzeit; und/oder Daten, welche die Vorrichtung (310) beschreiben, umfasst.

**13.** Vorrichtung (310) umfassend:

ein sicheres Element;
einen Prozessor; und
Speicher, welcher computerausführbare Anweisungen speichert, welche bei Ausführung durch den Prozessor die Vorrichtung (310) dazu veranlassen:

eine Anforderung nach einem Schlüssel, Daten, welche den angeforderten Schlüssel beschreiben, und einem Anforderergeheimnis, welches mit einem zweiten Server (320) geteilt wird, von innerhalb der Vorrichtung (310) durch die Softwareanwendung (330) zu empfangen;
als Reaktion auf die Anforderung nach dem Schlüssel, eines aus einer Vielzahl von Gruppenschlüsseln und einer verknüpften Sitzungskennung durch die Softwareanwendung (330) auszuwählen;
eine Nachricht an einen ersten Server (340), welche mit dem ausgewählten Gruppenschlüssel verschlüsselt ist, zu senden, wobei die Nachricht mit der verknüpften Sitzungskennung und einer Kennung des sicheren Elements gesendet wird;
vom ersten Server (340) eine Antwort auf die Nachricht zu empfangen, wobei die Antwort eine Authentifizierungsanforderung und eine Anforderungssitzungskennungswurzel beinhaltet;
die Antwort unter Verwendung des ausgewählten Gruppenschlüssels und Senden der Authentifizierungsanforderung an das sichere Element zu entschlüsseln;
Authentifizieren der Authentifizierungsanforderung und, wenn gültig, Generieren von Schlüsselmaterialien und eines in dem sicheren Element gespeicherten Schlüssels aus der Authentifizierungsanforderung durch das sichere Element;
den Masterschlüssel basierend auf den generierten Schlüsselmaterialien durch die Softwareanwendung (330) abzuleiten;
Speichern des Masterschlüssels mit der Anforderungssitzungskennungswurzel innerhalb der Vorrichtung (310);
Ableiten eines oder mehrerer Schlüssel basierend auf dem Masterschlüssel, der Daten, welche den angeforderten Schlüssel beschreiben, und des Anforderergeheimnisses durch die Softwareanwendung (330);
Generieren einer Schlüsselbezeichnung, umfassend die Anforderungssitzungskennungswurzel und die Daten, welche den angeforderten Schlüssel beschreiben, für jeden des einen oder der mehreren Schlüssel durch die Softwareanwendung (330); und
Senden der einen oder mehreren Schlüsselbezeichnungen an den zweiten Server (320) durch die Vorrichtung (310);

**14.** System, umfassend:

die Vorrichtung (310) nach Anspruch 13; und
einen ersten Server (340) umfassend:

einen Prozessor; und
Speicher, welcher computerausführbare Anweisungen speichert, welche bei Ausführung durch den Prozessor den ersten Server (340) dazu veranlassen:
als Reaktion auf eine von der Vorrichtung empfangene Nachricht (310):

einen Authentifizierungsvektor basierend auf der Kennung des sicheren Elements zu erhalten, wobei der Authentifizierungsvektor Schlüsselmaterialien und eine Authentifizierungsanforderung umfasst,
eine Anforderungssitzungskennungswurzel zu generieren,
unter Verwendung des mit der Sitzungskennung verknüpften Gruppenschlüssels eine aus der Authentifizierungsanforderung und der Anforderungssitzungskennungswurzel gebildete Antwort zu verschlüsseln,
eine Antwort an die Vorrichtung (310) zu senden,
einen Masterschlüssel basierend auf den Schlüsselmaterialien zu generieren,
von einem zweiten Server (320) eine oder mehrere Schlüsselbezeichnungen und ein Anforderergeheimnis zu empfangen,
den einen oder die mehreren Schlüssel basierend auf dem Masterschlüssel, der einen oder der mehreren Schlüsselbezeichnungen und des Anforderergeheimnisses abzuleiten, und
den einen oder die mehreren Schlüssel an den zweiten Server (320) zu senden.

**15.** System nach Anspruch 14, wobei die computerausführbaren Anweisungen den ersten Server (340) weiter veranlassen, den Authentifizierungsvektor aus einer Heimatdatei basierend auf einer Kennung der Vorrichtung (310) abzurufen, welche in einer Sitzungskennung innerhalb der empfangenen Nachricht beinhaltet ist.

## Revendications

**1.** Procédé de partage de clés entre un dispositif (310) et un second serveur (320), le dispositif (310) comportant un élément sécurisé et une application logicielle (330) comprenant une pluralité de clés de groupe et d’identifiants de session associés, le procédé comprenant les étapes suivantes :

l’application logicielle (330) reçoit depuis le dispositif (310) une demande d’une clé, des données décrivant la clé demandée et un secret du demandeur partagé avec le second serveur (320) ;
en réponse à la demande de la clé, l’application logicielle (330) sélectionne l’une parmi la pluralité de clés de groupe et un identifiant de session associé ;
le dispositif (310) envoie à un premier serveur (340) un message chiffré à l’aide de la clé de groupe sélectionnée, le message étant envoyé avec l’identifiant de session associé et un identifiant de l’élément sécurisé ;
le premier serveur (340) déchiffre le message à l’aide de la clé de groupe identifiée par l’identifiant de session associé ;
en réponse au message, le premier serveur (340) :

obtient un vecteur d’authentification sur la base de l’identifiant de l’élément sécurisé, le vecteur d’authentification comprenant des éléments de clés et une demande d’authentification,
génère une racine d’identifiant de session de la demande,
à l’aide de la clé de groupe associée à l’identifiant de session, chiffre une réponse formée à partir de la demande d’authentification et de la racine d’identifiant de session de la demande,
envoie la réponse au dispositif (310), et
génère une clé maîtresse sur la base des éléments de clés ;

l’application logicielle (330) déchiffre la réponse à l’aide de la clé de groupe sélectionnée et envoie la demande d’authentification à l’élément sécurisé ;
l’élément sécurisé authentifie la demande d’authentification et, lorsqu’elle est valide, génère les éléments de clés à partir de la demande d’authentification et d’une clé stockée dans l’élément sécurisé ;
l’application logicielle (330) dérive la clé maîtresse sur la base des éléments de clés générés ;
stocke dans le dispositif (310) la clé maîtresse avec la racine d’identifiant de session de la demande ;
l’application logicielle (330) dérive une ou plusieurs clés sur la base de la clé maîtresse, des données décrivant la clé demandée et du secret du demandeur ;
l’application logicielle (330) génère une étiquette de clé pour chacune des une ou plusieurs clés comprenant la racine d’identifiant de session de la demande et les données décrivant la clé demandée ;

le dispositif (310) envoie les une ou plusieurs étiquettes de clés au second serveur (320) ;
le second serveur (320) envoie les une ou plusieurs étiquettes de clés et le secret du demandeur au premier serveur (340) ;
le premier serveur (340) dérive les une ou plusieurs clés sur la base de la clé maîtresse, des une ou plusieurs étiquettes de clés et du secret du demandeur ; et
le premier serveur (340) envoie les une ou plusieurs clés au second serveur (320).

**2.** Procédé selon la revendication 1, dans lequel l'élément sécurisé est une carte à circuits intégrés universelle, UICC, un module de sécurité matériel, ou une carte SIM intégrée, iSIM ; et/ou
dans lequel l'application logicielle (330) est exécutée dans l'élément sécurisé du dispositif (310) ou dans un annuaire d'applications du dispositif (310).

**3.** Procédé selon la revendication 1 ou la revendication 2, comprenant en outre l'étape au cours de laquelle le dispositif (310) et le second serveur (320) sécurisent des communications à l'aide des une ou plusieurs clés, dans lequel facultativement :

l'étape au cours de laquelle l'élément sécurisé du dispositif (310) authentifie la réponse comprend en outre une étape où l'élément sécurisé génère une réponse, RES, sur la base des éléments de clés, et dans lequel en outre la sécurisation des communications inclut l'envoi de la RES au second serveur (320) ; et/ou
dans lequel les communications sont sécurisées au moyen d'une norme de chiffrement évoluée, AES.

**4.** Procédé selon une quelconque revendication précédente comprenant en outre un ou plusieurs parmi :

une étape au cours de laquelle le dispositif (310) et/ou le second serveur (320) signent un message à l'aide des une ou plusieurs clés ;
dans lequel la pluralité de clés de groupe est constituée de clés pré-partagées communes à une pluralité de dispositifs distincts ;
dans lequel un algorithme de hachage sécurisé, SHA, est utilisé pour dériver les une ou plusieurs clés ;
dans lequel les une ou plusieurs clés dérivées sont stockées dans le dispositif (310) et associées à l'identifiant de session ;
dans lequel les une ou plusieurs clés dérivées sont stockées dans le premier et/ou le second serveur (320) ; et
dans lequel l'identifiant de session inclut des données indiquant une finalité des une ou plusieurs clés.

**5.** Procédé selon une quelconque revendication précédente, dans lequel la clé de groupe utilisée pour chiffrer le message et/ou la réponse au message est l'une quelconque parmi :

une clé générée précédemment, le message étant envoyé avec un identifiant de session associé à la clé générée précédemment ; ou
une clé pré-partagée.

**6.** Procédé selon une quelconque revendication précédente, dans lequel l'identifiant de session inclut un identifiant chiffré du dispositif (310), dans lequel facultativement :

l'identifiant chiffré du dispositif (310) est l'identité internationale d'abonné mobile, IMSI, du dispositif; et/ou
le premier serveur (340) obtient le vecteur d'authentification à partir d'un registre de localisation nominal, HLR, sur la base de l'identifiant du dispositif (310).

**7.** Procédé selon une quelconque revendication précédente, dans lequel le message comprend en outre un identifiant du réseau de desserte et une IMEI du dispositif (310) ;

dans lequel le message est envoyé avec l'identifiant de session associé en incluant l'identifiant de session associé dans le message dans une partie non chiffrée du message ; et/ou
dans lequel le message inclut un quelconque ou plusieurs parmi :

des données indiquant un compteur incrémenté à chaque utilisation de l'identifiant de session ; et
un identifiant d'un réseau de desserte.

**8.** Procédé selon une quelconque revendication précédente, dans lequel le vecteur d'authentification inclut un RAND et

un AUTN.

**9.** Procédé selon une quelconque revendication précédente, comprenant en outre l'étape de :
répétition des étapes du procédé de façon à dériver une ou plusieurs nouvelles clés à l'aide d'un identifiant de session différent.

**10.** Procédé selon une quelconque revendication précédente, dans lequel les données décrivant la clé demandée comprennent un quelconque ou plusieurs parmi :

un numéro de clé ; et/ou
une utilisation de la clé, l'utilisation de la clé comprenant facultativement un quelconque ou plusieurs parmi :

une clé de chiffrement générale ;
une clé d'intégrité générale ;
une clé de gestion d'applications ;
une clé de protection de script ;
une clé de protection de mémoire ; et
une clé de serveur.

**11.** Procédé selon une quelconque revendication précédente, dans lequel l'étape au cours de laquelle l'application logicielle (330) génère une étiquette de clé comprend en outre une compression des données décrivant la clé demandée avant leur incorporation dans l'étiquette de clé.

**12.** Procédé selon une quelconque revendication précédente, dans lequel l'étape au cours de laquelle le premier serveur (340) envoie les une ou plusieurs clés au second serveur (320) comprend en outre l'envoi des une ou plusieurs clés sous forme de réponse d'interface de programmation d'application, API, REST, dans lequel facultativement la réponse de l'API REST comprend en outre une date et une heure d'expiration ; et/ou des données décrivant le dispositif (310).

**13.** Dispositif (310) comprenant :

un élément sécurisé ;
un processeur ; et
une mémoire stockant des instructions exécutables par ordinateur qui, lorsqu'elles sont exécutées par le processeur, amènent le dispositif (310) à :

au moyen d'une application logicielle (330), recevoir du dispositif (310) une demande d'une clé, des données décrivant la clé demandée et un secret du demandeur partagé avec un second serveur (320) ;
en réponse à la demande de la clé, l'application logicielle (330) sélectionne l'une parmi une pluralité de clés de groupe et un identifiant de session associé ;
envoyer à un premier serveur (340) un message chiffré à l'aide de la clé de groupe sélectionnée, le message étant envoyé avec l'identifiant de session associé et un identifiant de l'élément sécurisé ;
recevoir du premier serveur (340) une réponse au message, la réponse incluant une demande d'authentification et une racine d'identifiant de session de la demande ;
déchiffrer la réponse à l'aide de la clé de groupe sélectionnée et envoyer la demande d'authentification à l'élément sécurisé ;
l'élément sécurisé authentifie la demande d'authentification et, lorsqu'elle est valide, il génère des éléments de clés à partir de la demande d'authentification et d'une clé stockée dans l'élément sécurisé ;
dériver, au moyen de l'application logicielle (330), une clé maîtresse sur la base des éléments de clés générés ;
stocker dans le dispositif (310) la clé maîtresse avec la racine d'identifiant de session de la demande ;
l'application logicielle (330) dérive une ou plusieurs clés sur la base de la clé maîtresse, des données décrivant la clé demandée et du secret du demandeur ;
l'application logicielle (330) génère une étiquette de clé pour chacune des une ou plusieurs clés comprenant la racine d'identifiant de session de la demande et les données décrivant la clé demandée ; et
le dispositif (310) envoie les une ou plusieurs étiquettes de clés au second serveur (320).

**14.** Système comprenant :

le dispositif (310) selon la revendication 13 ; et
un premier serveur (340) comprenant :

un processeur ; et
une mémoire stockant des instructions exécutables par ordinateur qui, lorsqu'elles sont exécutées par le processeur, amènent le premier serveur (340) à :
en réponse à un message reçu du dispositif (310) :

obtenir un vecteur d'authentification sur la base de l'identifiant de l'élément sécurisé, le vecteur d'authentification comprenant des éléments de clés et une demande d'authentification,
générer une racine d'identifiant de session de la demande,
à l'aide de la clé de groupe associée à l'identifiant de session, chiffrer une réponse formée à partir de la demande d'authentification et de la racine d'identifiant de session de la demande,
envoyer une réponse au dispositif (310),
générer une clé maîtresse sur la base des éléments de clés,
recevoir d'un second serveur (320) une ou plusieurs étiquettes de clés et un secret du demandeur,
dériver les une ou plusieurs clés sur la base de la clé maîtresse, des une ou plusieurs étiquettes de clés et du secret du demandeur, et
envoyer les une ou plusieurs clés au second serveur (320).

**15.** Système selon la revendication 14, dans lequel les instructions exécutables par ordinateur amènent en outre le premier serveur (340) à récupérer le vecteur d'authentification à partir d'un registre de localisation nominal sur la base d'un identifiant du dispositif (310) inclus dans un identifiant de session dans le message reçu.

Generate session identifier
15
Identify group key
20
11
Send message to server
25
Send authentication request to device
30
Authenticate response
35
Generate cryptographic material
40
The device deriving key or keys
45
The server deriving key or keys
50

Fig. 1

Receive key request 115
Select group key 120
Send message to 1st server 125
1st server decrypting message 130
1 server obtain authentication vector 135
1 server generates request session ID root 140
st 1 server sends auth request to device 145
st
1 server generates master key 150
st
Software application decrypts the auth request 155
Secure element authenticates auth request 160
Generate key materials 165
Software application derives master key 170
Software application derives further key 175
11

Fig. 1A

200
Communication Interfaces
220
System Circuitry
230
I/O Interface Circuitry
240
Display Circuitry
250
GUIs
260
Datastore
272
274
270
Processor(s)
280
Memory
290
Operating System
292
Applications
294
Dynamic Data
296
Static Data
298
200

Fig. 2

Customer's Service
320
300
SIM Trust API(s)
DAB
API(s)
DAB Service
Network Operator Interface
340
SIM Trust Service
Store and forward messaging Service
SIM Trust SDK
SIM
Modem
Customer Application
SIM Trust SDK
DAB SDK
330
Customer Device
310
Fig. 3

Memory
SIM
SIM Trust SDK
Customer Application
Modem
SIM Trust Server
Network Operator
read configuration at first power on
Decode configuration
Idle
any UDP/TCP message
silently ignore
request new key
check current Master Keys are valid
alt
[Master Keys are valid]
Calculate new derived Key
newkey, Key Label
end
[Master Keys are missing or invalid]
Read IMSI
IMSI Value
Choose random Group key and encrypt
AT Command(BEST(EMSDP Session Request(IMSI)))
BEST(EMSDP Session Request(IMSI))
verify encryption and decode IMSI
AT(check for response)
Get quintet(IMSI)
Security Quintet
AT(check for response)
create new Key Label and store Key Label with CK and IK in dB
BEST(EMSDP Session Start(RAND,AUTN))
AT(check for response)
AT(BEST(EMSDP Session Start(RAND,AUTN)))
AUTHENTICATE (RAND,AUTN)
RES, CK and IK
Calculate new derived Key
newkey, Key Label
end


Fig. 4

AWS SIM Trust
Server Instance
Device (ALT1250)
SIM Trust
BEST SDK
BEST Key
Agreement
SIM Trust
Service
Example
Customer
Application
Customer server
CoAP/DTLS
with CoAP/SDK
for customer
Communication
CoAP/DTLS
with SIM
Trust PSK
CoAP/DTLS
with CoAP
for customer
Communication

Fig. 5

SIM Trust
Service
BEST Key
Agreement
ALT1250
Modem
AT Commands
SIM/iSIM
AT+CSIM
commands
SIM Trust
BEST SDK
AT Commands or/and
function calls
Example
Customer
Application
Memory

Fig. 6

Customer Server
HTTPs/REST
SIM Trust Server
REST API Server (fastAPI/python)
Database
Network Operator
HTTPs/REST
Best Interface
BEST
Device

Fig. 7

| # | Name | Type | Collation | Attributes | Null | Default | Comments | Extra |
|---|---|---|---|---|---|---|---|---|
| 1 | id | int | | | No | *None* | Unique ID for each Keyset | AUTO_INCREMENT |
| 2 | SessionRoot | varchar(10) | utf8mb4_0900_ai_ci | | No | *None* | First 7 chars of the session associated with the key | |
| 3 | IMSI | varchar(20) | utf8mb4_0900_ai_ci | | No | *None* | IMSI provided by device | |
| 4 | CK | varchar(64) | utf8mb4_0900_ai_ci | | No | *None* | Cyphering Key provided in the quintet stored as hex char | |
| 5 | IK | varchar(64) | utf8mb4_0900_ai_ci | | No | *None* | Integrity Key provided in the quintet stored as hex char | |
| 6 | ToDevCounter | int | | | No | *None* | message counter from server to device | |
| 7 | FromDevCounter | int | | | No | *None* | message counter from device to server | |
| 8 | BTID_Created | date | | | No | *None* | Date Time that the Keyset record was created | |
| 9 | BTID_Expires_Use | date | | | No | *None* | Date Time from which the key should not be used for encryption and signing | |
| 10 | BTID_Expire_Signing | date | | | No | *None* | Date Time from which no actions including verification should happen with this keyset | |
| 11 | isGroupKey | tinyint(1) | | | No | *None* | Marks the keyset as a group keyset used only for initial messages | |
| 12 | Active | tinyint(1) | | | No | *None* | If False the keyset is REVOKED and should not be used. | |

Fig. 8

To Network Operators
PoCI Server Instance
SIM Trust Service
Key Management
MySQL Database
REST API Interface
TCP/HTTP
Device
UDP/BEST
TCP/BEST
UDP/CoAP
UDP/CoAP/DTLS
TCP/MQTT
UDP/MQTT/TLS
Customer Solution Example
MQTT server
DAB Server
TCP/HTTPs
Demonstration PC
MQTT Client
TCP/MQTT
UDP/MQTT/TLS
MQTT Management TCP/TLS
TCP/HTTPs
Trusted Enrichment Services

Fig. 9

PKI
Every Session:
(requires at least 20%
more processing power)
Device
Server
ClientHello
(inc Supported Cypher
suites and identity)
ServerHello
(inc TLS version to use
& Cypher suite to use)
Digital Certificate
Encrypted Secret
Calc
Key
Calc
Key
Encrypted Data Message

Secure Tech
If no valid key:
Device
Secure Tech
Server
New key request (IMSI)
RAND challenge (BTID, RAND)
Response (RES)
Calc
Key
Calc
Key
AES-256-GCM
(Encryption & Integrity)
SHA-256
(Key derivation)
Encrypted Data Message
If Valid key exists:
no handshake required!

Fig. 10

SIM Trust
if no valid key:
Device
SIM Trust Server
New key request (IMSI)
RAND challenge (BTID, RAND)
Response (RES)
Calc Key
Calc Key
AES-256-GCM (Encryption & Integrity)
SHA-256 (Key derivation)
Encrypted Data Message
if Valid key exists: no handshake required!
PKI
Every Session: (requires at least 20% more processing power)
Device
Server
ClientHello (inc Supported Cypher suites and identity)
ServerHello (inc TLS version to use & Cypher suite to use)
Digital Certificate
Encrypted Secret
Calc Key
Calc Key
Encrypted Data Message

% prob message success
95%
P(message)=p(1)*p(2)\<1%

Fig. 11

7 Chars*
2 Chars*
1 Chars*
“CCCCCCC”
“CC”
“C”
Session ID Root
Key Type ID
Server ID

* Chars are ( 0 to 9 ), (A to Z) and (a to z) excluding “O”, ”k”, “l” and “o”

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2017041785 A
- US 2016234177 A
- US 2022368684 A